# EUROPEAN PATENT SPECIFICATION

(11) **EP 4 601 113 B1**
(45) Date of publication and mention of the grant of the patent: **29.07.2026**
(21) Application number: 22963577.6
(22) Date of filing: 27.10.2022
(51) Int. Cl.: H01Q 1/12, H01Q 1/32, H01Q 1/40, H01Q 9/40

(54) **TRANSPARENT ANTENNA MODULE ARRANGED ON VEHICLE GLASS**
AUF FAHRZEUGSCHEIBE ANGEORDNETES TRANSPARENTES ANTENNENMODUL
MODULE D'ANTENNE TRANSPARENT AGENCÉ SUR UN VITRAGE DE VÉHICULE

(43) Date of publication of application: 13.08.2025
(73) Proprietor: LG Electronics Inc., Yeongdeungpo-gu Seoul 07336 (KR)
(72) Inventor: YOU, Dongjoo, Seoul 06772 (KR); CHO, Ilnam, Seoul 06772 (KR); JUNG, Kangjae, Seoul 06772 (KR); LEE, Junseok, Seoul 06772 (KR); PARK, Byeongyong, Seoul 06772 (KR); CHO, Seongmoon, Seoul 06772 (KR)
(74) Representative: Vossius & Partner Patentanwälte Rechtsanwälte mbB
(86) International application number: PCT/KR2022/016606
(87) International publication number: WO 2024/090616

(56) References cited:
- JP-A- 2006 042 240
- JP-A- 2014 204 377
- KR-A- 20080 004 556
- KR-A- 20120 020 088
- KR-A- 20220 099 301
- KR-A- 20220 123 133
- KR-Y1- 200 217 328
- KR-Y1- 200 217 328
- US-B2- 6 369 773

## Description

### Technical Field

This specification relates to a transparent antenna arranged on a vehicle. One or more embodiments relate to a transparent antenna module made of a transparent material to suppress an antenna region from being visible on vehicle glass.

### Background Art

A vehicle may perform wireless communication services with other vehicles, nearby objects, infrastructures, or a base station. In this regard, various communication services may be provided through a wireless communication system to which an LTE communication technology or a 5G communication technology is applied. Meanwhile, some of LTE frequency bands may be allocated for 5G communication services.

A vehicle body and roof are formed of metallic material, which causes a problem with blocking radio waves. Accordingly, a separate antenna structure may be arranged on top of the vehicle body or the vehicle roof. Alternatively, when the antenna structure is arranged below the vehicle body or roof, a portion of the vehicle body or roof corresponding to an antenna arrangement region may be formed of a non-metallic material.

However, in terms of design, the vehicle body or roof needs to be integrally formed. In this case, the exterior of the vehicle body or roof may be formed of a metallic material. This may cause antenna efficiency to be drastically lowered due to the vehicle body or roof.

In relation to this, to increase a communication capacity without a change in the exterior design of the vehicle, a transparent antenna may be arranged on glass corresponding to a window of the vehicle. However, antenna radiation efficiency and impedance bandwidth characteristics are deteriorated due to electrical loss of the transparent antenna.

As communication technologies are developed from 4G (LTE) to 5G communication, antennas for vehicle continuously demand network expandability from the related art FM/AM antennas or LTE antennas to 5G antennas or V2X antennas. However, 5G signals exhibit high linearity as frequencies rise, and when there is an obstacle, it may lead to a signal loss. Materials with low dielectric constant and low dielectric loss are required to minimize signal loss in 5G frequency bands. In this regard, the signal loss may be determined in proportion to the frequency, the square root of the dielectric constant, and the dielectric loss.

Therefore, there are various requirements for implementing antennas, for example, network expandability capable of supporting future high-speed communication, design flexibility not to interfere with the design of the vehicle, installation facilitation to be actually mounted on the vehicle, and the like, as well as antenna performance including the signal loss. Therefore, a technology to be proposed herein relates to a transparent antenna for a vehicle that satisfies these future communication requirements.

Typically, a transparent antenna for a vehicle may minimize signal loss owing to invisible installation on vehicle glass, and may also be expanded to 5G or V2X antenna without limit to installation area and space. The transparent antenna has an advantage of not spoiling the appearance of a vehicle, and it is necessary that the transparent antenna is applicable to various types of vehicles.

Therefore, to maximize the advantages of transparent antennas, this specification proposes a transparent antenna structure and material that may be implemented at low cost without being visually recognized by a driver's field of view or from outside.

JP 2014-204377 A discloses in a film antenna stuck to a glass surface as of a vehicle by forming an antenna terminal and an antenna pattern on a synthetic resin film surface, the antenna pattern is configured such that copper wires of fine width are connected in the shape of mesh by etching on the surface of the synthetic resin film. Also, a separator is stuck via an adhesive covering the mesh-shaped antenna pattern. By peeling the separator, the exposed adhesive is applied to the glass surface as of a vehicle.

US 6,369,773 B2 discloses a sheet antenna that comprises a substrate sheet, a layer of antenna element composed of a conductive material and a carbon-containing layer, the layer of antenna element and the carbon-containing layer being laminated on the substrate sheet is disclosed.

KR 20220123133 A discloses wideband antennas deployed on vehicles.

KR 200217328 Y1 discloses an antenna device configured to stick on vehicle glass.

### Disclosure of Invention

### Technical Problem

One aspect of the disclosure is to solve the aforementioned problems and other drawbacks. Another aspect is to implement a vehicle antenna that is capable of being attached to vehicle glass and performing 5G and V2X communications.

Another aspect of this specification is to provide a transparent antenna structure and material that is capable of being implemented at low cost without being visually recognized by a driver's field of view or from outside, to maximize the advantages of a transparent antenna.

Another aspect of this specification is to implement a transparent antenna module that is capable of being installed on side glass, front glass, sunroof, rear glass, side mirror, headlamp, and the like of a vehicle, so as to allow the antenna to be arranged without restriction by the design of the vehicle.

Another aspect of this specification is to propose a transparent antenna module that is capable of maintaining stable antenna performance even under changes in internal/external vehicle environments.

Another aspect of this specification is to minimize an occurrence of signal loss in a communication frequency band when receiving a communication signal through glass inside a vehicle by implementing each material in an antenna stack structure as a low-loss material and structure.

Another aspect of this specification is to implement a transparent antenna to be heat-resistant and have an anti-yellowing function because the antenna is easily exposed to high temperature and UV due to sunlight.

Another aspect of this specification is to improve transmittance of an antenna element without obscuring fields of view of a driver and a passenger.

Another aspect of this specification is to solve a problem with reduced transmittance and identification of an edge of a substrate to the naked eye by forming a transparent electrode layer on a transparent substrate.

Another aspect of this specification is to implement a transparent antenna module that is capable of minimizing an edge region where an opaque region of vehicle glass is formed.

Another aspect of this specification is to implement a transparent antenna module that is capable of improving antenna element transmittance and making an edge region of an antenna substrate as invisible as possible.

Another aspect of this specification is to simplify a manufacturing process and reduce manufacturing costs by avoiding the use of a separate antenna substrate layer on which an antenna pattern is formed.

### Solution to Problem

The scope of protection of the invention is solely defined by the appended claims. Only the examples or embodiments in this description that comprise all of the features of claim 1 can be considered to be part of the scope of protection of this application. According to one or more embodiments of the specification, transparent antenna module includes: a conductive pattern layer formed such that metal mesh grids formed at a first interval in one axial direction have a first thickness in a height direction - a radiator formed by the metal mesh grids is configured to radiate a wireless signal of a specific frequency band; and an adhesive layer having a front surface coupled to a lower end portion of the conductive pattern layer and a rear surface attached to glass of a vehicle. The lower end portion of the conductive pattern layer may be in contact with the front surface of the adhesive layer or extend to an inner region of the front surface of the adhesive layer.

As an embodiment, a radiator formed by the metal mesh grids may be configured to radiate a wireless signal of a specific frequency band.

As an embodiment, the adhesive layer may be formed by adding an inorganic material, containing a benzotriazole-based polymer, a triazole-based polymer, or SiO₂ or TiO₂, to an acrylic adhesive so that ultraviolet (UV) rays having a wavelength band between 330 nm and 380 nm are cut by at least a certain percentage.

As an embodiment, the inorganic material in the adhesive layer may be mixed in an amount of at least 1 wt% for UV cutting and in an amount of 30 wt% or less to be bonded to the glass.

As an embodiment, a height of the adhesive layer may be formed to be at least 10 um so that the adhesive layer is adhered to the glass and may be formed to be 100 um or less so that transmittance of the transparent antenna module is at least a threshold value.

As an embodiment, the height of the adhesive layer may be formed to be at least 50 um so that signal loss characteristics are below a threshold value in a frequency band of 0.6 GHz to 6 GHz and may be formed to be 100 um or less so that the transmittance of the transparent antenna module is at least the threshold value.

In all the embodiements, the conductive pattern layer is formed as a first structure in which a dielectric material is filled between the metal mesh grids. A thickness of the dielectric material may be formed to be equal to the first thickness of the conductive pattern layer.

As an embodiment, the transparent antenna module may further include: a transparent cover layer coupled to an upper end portion of the conductive pattern layer of the second structure; a first guide film having a rear surface coupled to a front surface of the transparent cover layer; and a second guide film coupled to the rear surface of the adhesive layer. The first guide film and the second guide film may be removed when the transparent antenna module is adhered to the glass of the vehicle.

As an embodiment, the transparent antenna module may further include: a guide film formed between the conductive pattern layer of the first structure filled with the dielectric material and the adhesive layer; and a transparent coating layer formed in an upper region of the conductive pattern layer of the first structure filled with the dielectric material. The guide film may be removed when the transparent antenna module is adhered to the glass of the vehicle.

As an embodiment, the conductive pattern layer may be formed as a second structure in which a dielectric material is not filled between the metal mesh grids. A second thickness of the conductive pattern layer of the second structure may be formed thinner than the first thickness of the conductive pattern layer of the first structure filled with the dielectric material. A lower end portion of the conductive pattern layer of the second structure may be inserted into the inner region of the adhesive layer.

As an embodiment, the transparent antenna module may further include: a transparent cover layer coupled to an upper end portion of the conductive pattern layer of the second structure; a first guide film having a rear surface coupled to a front surface of the transparent cover layer; and a second guide film coupled to the rear surface of the adhesive layer. The first guide film and the second guide film may be removed when the transparent antenna module is adhered to the glass of the vehicle. A second height of the conductive pattern layer of the second structure after being inserted into the inner region of the adhesive layer may be smaller than the second thickness of the conductive pattern layer of the second structure before being inserted into the internal region of the adhesive layer.

As an embodiment, the conductive pattern layer may be formed as a third structure in which a dielectric material is not filled between the metal mesh grids. A third thickness of the conductive pattern layer of the third structure may be formed thinner than the first thickness of the conductive pattern layer of the first structure filled with the dielectric material. A lower end portion of the conductive pattern layer of the third structure may be in contact with a front surface of the adhesive layer.

As an embodiment, the transparent antenna module may further include: a guide film formed between the conductive pattern layer of the third structure and the adhesive layer; and a transparent coating layer formed in an upper region of the conductive pattern layer of the third structure. The guide film may be removed when the transparent antenna module is adhered to the glass of the vehicle. A third height of the conductive pattern layer of the third structure after being in contact with the front surface of the adhesive layer may be equal to the third thickness of the conductive pattern layer of the third structure before being in contact with the front surface of the adhesive layer.

As an embodiment, the conductive pattern layer constituting the radiator may be configured to be connected to a feeding pattern formed on an opaque substrate. One end portion of the conductive pattern layer may extend to an outer region compared to one end portion of the adhesive layer. A first electrode may be arranged on a rear surface of the conductive pattern layer, on which the adhesive layer is not formed, to be connected to a second electrode of the feeding pattern.

As an embodiment, the first electrode may be connected to the second electrode of the feeding pattern through ACF bonding on the rear surface of the conductive pattern layer. The ACF bonding may be to bond the first electrode and the second electrode using a tape, to which metal balls are added, in a certain temperature range and a certain pressure range, such that the first electrode and the second electrode are in contact with each other through the metal balls.

As an embodiment, the second electrode formed on one end portion of the feeding pattern may be connected to the radiator implemented as a transparent antenna. The second electrode formed on another end portion of the feeding pattern may be soldered to one end portion of a cable. Another end portion of the cable may be electrically connected to a telematics control unit (TCU) configured to transmit a wireless signal to the radiator of the transparent antenna module and control the transparent antenna module.

According to one or more embodiments of the specification, a method for manufacturing a transparent antenna module includes: a conductive pattern layer forming step of forming a conductive pattern layer such that metal mesh grids formed at a first interval in one axial direction are formed to have a first thickness in a height direction; an adhesive layer forming step of forming an adhesive layer so that a front surface thereof is coupled to a lower end portion of the conductive pattern layer; and an adhesive layer attachment step of attaching a rear surface of the adhesive layer to glass of a vehicle. In the adhesive layer forming step, the lower end portion of the conductive pattern layer may be in contact the front surface of the adhesive layer or extends to an inner region of the front surface of the adhesive layer.

As an embodiment, in the conductive pattern layer forming step, the conductive pattern layer may be formed as a third structure in which a dielectric material is not filled between the metal mesh grids. A thickness of the dielectric material may be formed to be equal to the first thickness of the conductive pattern layer.

As an embodiment, the method may further include: a transparent cover layer attachment step of attaching a transparent cover layer, which is coupled to an upper end portion of the conductive pattern layer of the first structure filled with the dielectric material; a first guide film forming step of forming a first guide film whose rear surface is coupled to a front surface of the transparent cover layer; and a second guide film forming step of forming a second guide film coupled to the rear surface of the adhesive layer. In the adhesive layer attachment step, the first guide film and the second guide film may be removed when the transparent antenna module is adhered to the glass of the vehicle.

As an example, the method may further include: a guide film forming step of forming a guide film on the rear surface of the adhesive layer; and a transparent coating layer forming step of forming a transparent coating layer in an upper region of the conductive pattern layer of the first structure filled with the dielectric material. In the adhesive layer attachment step, the guide film may be removed when the transparent antenna module is adhered to the glass of the vehicle.

As an embodiment, in the conductive pattern layer forming step, the conductive pattern layer may be formed as a second structure in which a dielectric material is not filled between the metal mesh grids. A second thickness of the conductive pattern layer of the second structure may be formed thinner than the first thickness of the conductive pattern layer of the first structure filled with the dielectric material. A lower end portion of the conductive pattern layer of the second structure may be inserted into the inner region of the adhesive layer.

As an embodiment, the method may further include: a transparent cover layer attachment step of attaching a transparent cover layer, which is coupled to an upper end portion of the conductive pattern layer of the second structure; a first guide film forming step of forming a first guide film whose rear surface is coupled to a front surface of the transparent cover layer; and a second guide film forming step of forming a second guide film coupled to the rear surface of the adhesive layer. In the adhesive layer attachment step, the first guide film and the second guide film may be removed when the transparent antenna module is adhered to the glass of the vehicle. A second height of the conductive pattern layer of the second structure after being inserted into the inner region of the adhesive layer may be smaller than the second thickness of the conductive pattern layer of the second structure before being inserted into the internal region of the adhesive layer.

As an embodiment, the method may further include: a guide film forming step of forming a guide film on the rear surface of the adhesive layer; and a transparent coating layer forming step of forming a transparent coating layer in an upper region of the conductive pattern layer of the third structure. In the adhesive layer attachment step, the guide film may be removed when the transparent antenna module is adhered to the glass of the vehicle. A third height of the conductive pattern layer of the third structure after being in contact with the front surface of the adhesive layer may be equal to the third thickness of the conductive pattern layer of the third structure before being in contact with the front surface of the adhesive layer.

### Advantageous Effects of Invention

The technical effects of a transparent antenna module that may be arranged on a vehicle glass and a transparent antenna manufacturing method for manufacturing the same will be described as follows.

According to the specification, a transparent antenna module in which a conductive pattern layer is coupled to an adhesive layer may be attached to a vehicle glass to be utilized as a vehicle antenna that may enable 5G and V2X communications.

According to the specification, a transparent antenna module may have an advantage of not being restricted by vehicle design because the transparent antenna module is installable on side glass, windshield, sunroof, rear glass, side mirrors, headlamps, and the like of a vehicle.

According to the specification, a transparent antenna module that is capable of maintaining stable antenna performance even under changes in internal/external vehicle environments may be provided.

According to the specification, an occurrence of signal loss in a communication frequency band when receiving a communication signal through glass inside a vehicle may be minimized by implementing each material in an antenna stack structure as a low-loss material and structure.

According to the specification, a transparent antenna module which has a heat-resistant material and an anti-yellowing function may be implemented even in an antenna because the antenna is easily exposed to high temperature and UV rays due to sunlight.

According to the specification, a transparent antenna module that is capable of improving the transmittance of an antenna element without obstructing the view of a driver and passengers may be implemented.

According to the specification, a transparent antenna module that is capable minimizing an edge region where an opaque region of vehicle glass is formed may be implemented.

According to the specification, a transparent antenna module may be implemented in which a conductive pattern layer is coupled to an adhesive layer without using a separate antenna substrate to solve a problem that transmittance is reduced and an edge of a substrate is visible by the naked eyes due to the formation of a transparent electrode layer on a transparent substrate.

According to the specification, antenna element transmittance may be improved and an edge region of an antenna substrate may be made as invisible as possible.

According to the specification, a manufacturing process may be simplified and manufacturing costs may be reduced by avoiding the use of a separate antenna substrate layer on which an antenna pattern is formed.

Further scope of applicability of the disclosure will become apparent from the following detailed description. It should be understood, however, that the detailed description and specific examples, such as the preferred embodiments, are given by way of illustration only, because various changes and modifications within the technical idea and scope of the disclosure will be apparent to those skilled in the art.

### Brief Description of Drawings

FIG. 1 is a view of vehicle glass on which an antenna structure according to an embodiment of the disclosure is to be arranged.
FIG. 2A is a front view of the vehicle of FIG. 1, which has an antenna assembly arranged in different regions of front glass.
FIG. 2B is a front perspective view of the inside of the vehicle of FIG. 1, which has the antenna assembly arranged in the different regions of the front glass.
FIG. 2C is a lateral perspective view of the vehicle of FIG. 1, which has the antenna assembly arranged on upper glass.
FIG. 3 illustrates types of V2X applications.
FIG. 4 is a block diagram referenced for explaining a vehicle and an antenna system mounted on the vehicle according to an embodiment of the disclosure.
FIG. 5 is a view of a configuration that an antenna assembly according to the disclosure is arranged on vehicle glass.
FIG. 6A is a view of a front side and a cross-section of a transparent antenna assembly according to the disclosure.
FIG. 6B is a view of grid structures of a metal mesh radiator region and a dummy metal mesh region according to embodiments.
FIG. 7A is an exploded perspective view of a structure in which a transparent antenna module according to this specification is stacked on vehicle glass.
FIG. 7B is a lateral view of antennas in which the transparent antenna module of FIG. 7A is implemented according to different embodiments.
FIG. 8A is a view of an acrylic adhesive structure forming an adhesive layer according to the disclosure.
FIG. 8B is a view of transmittance according to wavelengths of an adhesive according to this specification, in which a UV-cutting inorganic material is mixed with an acrylic adhesive in a certain ratio, and a typical adhesive to which an inorganic material is not added.
FIGS. 9A and 9B are views of a process of manufacturing a transparent antenna module in which a conductive pattern layer is formed with a dielectric material filled between metal grids.
FIGS. 10A and 10B are views of a process of manufacturing a transparent antenna module in which a conductive pattern layer is formed without filling a dielectric material between metal grids.
FIG. 11 is a view of signal loss characteristics according to changes in height of an adhesive layer of a transparent antenna module according to the specification on vehicle glass.
FIG. 12A is a lateral view of a first antenna structure including a separate dielectric structure between a conductive pattern layer and an adhesive layer and a second antenna structure in which the conductive pattern layer and the adhesive layer are directly coupled.
FIG. 12B compares frequency-based signal loss characteristics of the first antenna structure and the second antenna structure of FIG. 12A.
FIG. 13 is a view of a configuration in which a radiator and a feeding pattern of a transparent antenna module according to the specification and a telematics control unit are connected.
FIG. 14 is a flowchart of a method for manufacturing a transparent antenna module according to the specification.
FIGS. 15A to 16B are flowcharts of a method for manufacturing a transparent antenna module according to the embodiments of FIGS. 9A to 10B.

### Mode for the Invention

A description will now be given in detail according to embodiments disclosed herein, with reference to the accompanying drawings. For the sake of a brief description with reference to the drawings, the same or equivalent components may be provided with the same reference numbers, and the description thereof will not be repeated. Suffixes "module" and "unit" used for components used in the following description are merely intended for easy description of the specification, and each suffix itself is not intended to give any special meaning or function. In describing the embodiments disclosed herein, moreover, the detailed description will be omitted when a specific description for publicly known technologies to which the disclosure pertains is judged to obscure the gist of the disclosure. The accompanying drawings are used to help easily understand the technical idea of the present disclosure and it should be understood that the idea of the present disclosure is not limited by the accompanying drawings.

It will be understood that although the terms first, second, and the like may be used herein to describe various elements, these elements should not be limited by these terms. These terms are generally only used to distinguish one element from another.

It will be understood that when an element is referred to as being "connected with" another element, the element may be connected with the another element or intervening elements may also be present. In contrast, when an element is referred to as being "directly connected with" another element, there are no intervening elements present.

The singular forms are intended to include the plural forms as well, unless the context clearly indicates otherwise.

The term "include" or "has" as used herein should be understood that it is intended to indicate the existence of a feature, a number, a step, an element, a component, or a combination thereof disclosed in the specification, and it may also be understood that the existence or additional possibility of one or more other features, numbers, steps, elements, components, or combinations thereof are not excluded in advance.

An antenna system described herein may be mounted in a vehicle. Configurations and operations according to embodiments may also be applied to a communication system, namely, an antenna system mounted in a vehicle. In this regard, the antenna system mounted in the vehicle may include a plurality of antennas, and a transceiver circuit and a processor both configured to control the plurality of antennas.

Hereinafter, a description will be given of an antenna assembly (antenna module) that may be arranged on a window of a vehicle according to the disclosure, and an antenna system for a vehicle that includes the antenna assembly. In this regard, the antenna assembly may refer to a structure in which conductive patterns are combined on a dielectric substrate, and may also be referred to as an antenna module.

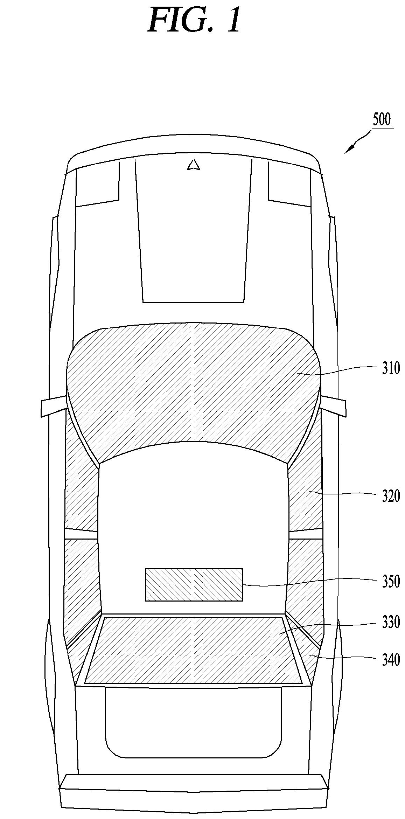

In this regard, FIG. 1 illustrates glass of a vehicle on which an antenna structure according to an embodiment may be arranged. Referring to FIG. 1, a vehicle 500 may include front glass 310, door glass 320, rear glass 330, and quarter glass 340. In some examples, the vehicle 500 may further include top glass 350 arranged on a roof in an upper region.

Therefore, the glass constituting the window of the vehicle 500 may include the front glass 310 arranged in a front region of the vehicle, the door glass 320 arranged in a door region of the vehicle, and the rear glass 330 arranged in a rear region of the vehicle. In some examples, the glass constituting the window of the vehicle 500 may further include the quarter class 340 arranged in a partial region of the door region of the vehicle. In addition, the glass constituting the window of the vehicle 500 may further include the top glass 350 spaced apart from the rear glass 330 and arranged in an upper region of the vehicle. Accordingly, each glass constituting the window of the vehicle 500 may also be referred to as a window.

The front glass 310 may be referred to as a front windshield because it suppresses wind blown from a front side from entering the inside of the vehicle. The front glass 310 may have a two-layer bonding structure having a thickness of about 5.0 to 5.5 mm. The front glass 310 may have a bonding structure of glass/shatterproof film/glass.

The door glass 320 may have a two-layer bonding structure or may be formed of single-layer compressed glass. The rear glass 330 may have a two-layer bonding structure having a thickness of about 3.5 to 5.5 mm or may be formed of single-layer compressed glass. In the rear glass 330, a spaced distance may be required between a transparent antenna and a heat line and AM/FM antenna. The quarter glass 340 may be formed of single-layer compressed glass with a thickness of about 3.5 to 4.0 mm, but is not limited thereto.

The size of the quarter glass 340 may vary depending on a type of vehicle, and may have a size smaller than the sizes of the front glass 310 and the rear glass 330.

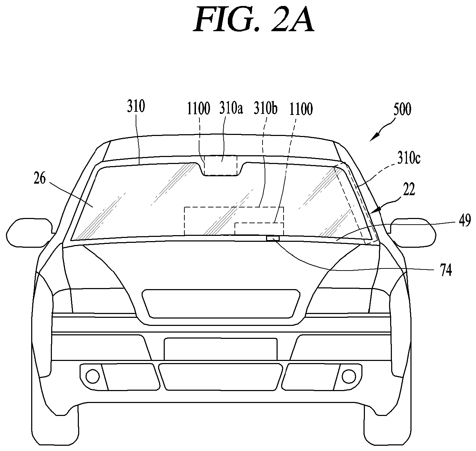

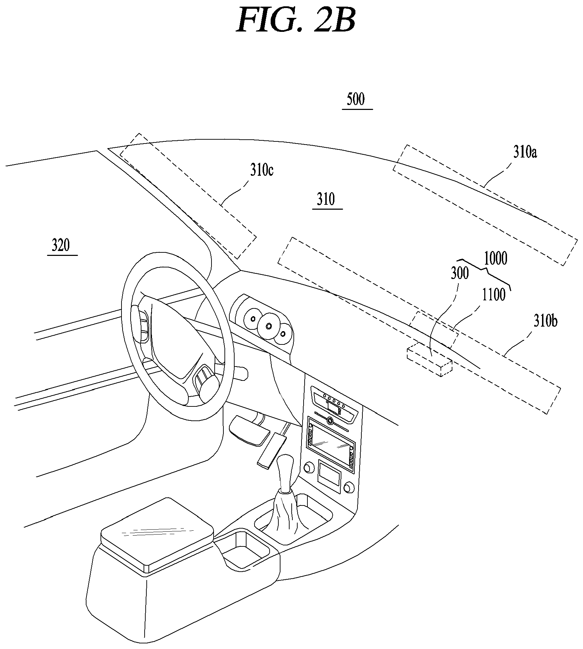

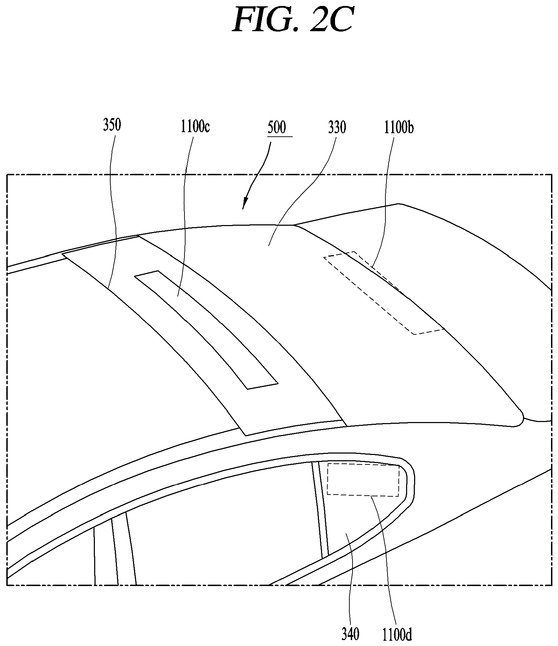

Hereinafter, a structure in which an antenna assembly according to the disclosure is arranged in different regions of the front glass of a vehicle will be described. An antenna assembly attached to vehicle glass may be implemented as a transparent antenna. In this regard, FIG. 2A is a front view of the vehicle of FIG. 1, which has an antenna assembly arranged in different regions of the front glass. FIG. 2B is a front perspective view illustrating the inside of the vehicle of FIG. 1, which has the antenna assembly arranged in the different regions of the front glass. FIG. 2C is a lateral perspective view of the vehicle of FIG. 1, which has the antenna assembly arranged on upper glass.

Referring to FIG. 2A which is the front view of the vehicle 500, a configuration in which the transparent antenna for the vehicle according to the specification may be arranged is illustrated. A pane assembly 22 may include an antenna arranged in an upper region 310a. The pane assembly 22 may include an antenna in the upper region 310a, an antenna in a lower region 310b, and/or an antenna in a side region 310c. The pane assembly 22 may also include translucent pane glass 26 formed of a dielectric substrate. The antenna in the upper region 310a, the antenna in the lower region 310b, and/or the antenna in the side region 310c may be configured to support any one or more of various communication systems.

An antenna module 1100 may be arranged in the upper region 310a, the lower region 310b, or the side region 310c of the front glass 310. When the antenna module 1100 is arranged in the lower region 310b of the front glass 310, the antenna module 1100 may extend to a body 49 of a lower region of the translucent pane glass 26. The body 49 of the lower region of the translucent pane glass 26 may have lower transparency than other portions. A portion of a feeder and other interface lines may be arranged on the body 49 of the lower region of the translucent pane glass 26. A connector assembly 74 may be implemented on the body 49 of the lower region of the translucent pane glass 26. The body 49 of the lower region may constitute a vehicle body made of a metal material.

Referring to FIG. 2B, an antenna assembly 1000 may include a telematics control unit (TCU) 300 and an antenna module 1100. The antenna module 1100 may be located in a different region of glass of the vehicle.

Referring to FIGS. 2A and 2B, the antenna assembly may be arranged in the upper region 310a, the lower region 310b, and/or the side region 310c of the vehicle glass. Referring to FIGS. 2A to 2C, the antenna assembly may be arranged on the front glass 310, rear glass 330, quarter glass 340, and upper glass 350 of the vehicle.

Referring to FIGS. 2A to 2C, the antenna arranged in the upper region 310a of the front glass 310 of the vehicle may be configured to operate in a low band LB, a mid band (MB), a high band (HB), and a 5G Sub6 band of 4G/5G communication systems. The antenna in the lower region 310b and/or the antenna in the side region 310c may also be configured to operate in the LB, MB, HB, and 5G Sub6 band of the 4G/5G communication systems. An antenna structure 1100b on the rear glass 330 of the vehicle may also be configured to operate in the LB, MB, HB, and 5G Sub6 band of the 4G/5G communication systems. An antenna structure 1100c on the upper glass 350 of the vehicle may also be configured to operate in the LB, MB, HB, and 5G Sub6 band of the 4G/5G communication systems. An antenna structure 1100d on the quarter glass 350 of the vehicle may also be configured to operate in the LB, MB, HB, and 5G Sub6 band of the 4G/5G communication systems.

At least a portion of an outer region of the front glass 310 of the vehicle may be defined by the translucent pane glass 26. The translucent pane glass 26 may include a first part in which an antenna and a portion of a feeder are formed, and a second part in which another portion of the feeder and a dummy structure are formed. The translucent pane glass 26 may further include a dummy region in which conductive patterns are not formed. For example, a transparent region of the translucent pane glass 22 may be transparent to secure light transmission and a field of view.

Although it is illustrated that conductive patterns may be formed in a partial region of the front glass 310, the conductive patterns may extend to the side glass 320 and the rear glass 330 of FIG. 1, and an arbitrary glass structure. In the vehicle 500, the occupants or driver may view road and surrounding environment through the pane assembly 22. In addition, the occupants or driver may view the road and surrounding environment without interference by the antenna in the upper region 310a, the antenna in the lower region 310b, and/or the antenna in the side region 310c.

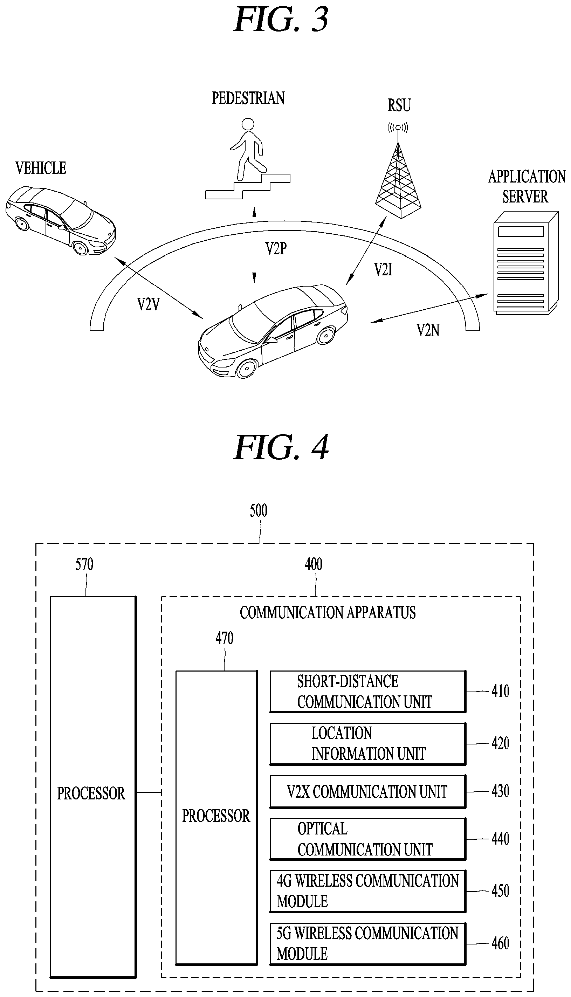

The vehicle 500 may be configured to communicate with pedestrians, adjacent infrastructures, and/or servers in addition to adjacent vehicles. FIG. 3 illustrates types of V2X applications. Referring to FIG. 3, vehicle-to-everything (V2X) communication may include communication between a vehicle and each of all entities, such as vehicle-to-vehicle (V2V) communication which refers to communication between vehicles, vehicle-to-infrastructure (V2I) communication which refers to communication between a vehicle and an eNB or a road side unit (RSU), vehicle-to-pedestrian (V2P) communication which refers to communication between a vehicle and a terminal carried by a person (a pedestrian, a cyclist, a vehicle driver, or a passenger), vehicle-to-network (V2N) communication, and the like.

Meanwhile, FIG. 4 is a block diagram illustrating a vehicle and an antenna system mounted on the vehicle according to an embodiment.

The vehicle 500 may include a communication device 400 and a processor 570. The communication device 400 may correspond to the telematics control unit (TCU) of the vehicle 500.

The communication device 400 may be a device for performing communication with an external device. Here, the external device may be another vehicle, a mobile terminal, or a server. The communication device 400 may perform the communication by including at least one of a transmitting antenna, a receiving antenna, a radio frequency (RF) circuit, and an RF device for implementing various communication protocols. In this regard, the communication device 400 may include a short-range communication unit 410, a location information unit 420, a V2X communication unit 430, an optical communication unit 440, a 4G wireless communication module 450, and a 5G wireless communication module 460. The communication device 400 may include a processor 470. According to an embodiment, the communication device 400 may further include other components in addition to the components described, or may not include some of the components described.

The 4G wireless communication module 450 and the 5G wireless communication module 460 may perform wireless communications with one or more communication systems through one or more antenna modules. The 4G wireless communication module 450 may transmit and/or receive signals to and/or from a device in a first communication system through a first antenna module. Also, the 5G wireless communication module 460 may transmit and/or receive signals to and/or from a device in a second communication system through a second antenna module. The 4G wireless communication module 450 and 5G wireless communication module 460 may also be physically implemented as one integrated communication module. For example, the first communication system and the second communication system may be an LTE communication system and a 5G communication system, respectively. However, the first communication system and the second communication system may not be limited thereto, and may expand to any different communication systems.

The processor of the device within the vehicle 500 may be implemented as a micro control unit (MCU) or a modem. The processor 470 of the communication device 400 may correspond to a modem, and the processor 470 may be implemented as an integrated modem. The processor 470 may acquire surrounding information from other adjacent vehicles, objects, or infrastructures through wireless communication. The processor 470 may perform vehicle control using the acquired surrounding information.

The processor 570 of the vehicle 500 may be a processor of a car area network (CAN) or advanced driving assistance system (ADAS), but is not limited thereto. When the vehicle 500 is implemented in a distributed control manner, the processor 570 of the vehicle 500 may be replaced with a processor of each device.

In some examples, the antenna module arranged in the vehicle 500 may include a wireless communication unit. The 4G wireless communication module 450 may perform transmission and reception of 4G signals with a 4G base station through a 4G mobile communication network. In this instance, the 4G wireless communication module 450 may transmit at least one 4G transmission signal to the 4G base station. In addition, the 4G wireless communication module 450 may receive at least one 4G reception signal from the 4G base station. In this regard, uplink (UL) multi-input/multi-output (MIMO) may be performed based on a plurality of 4G transmission signals transmitted to the 4G base station. In addition, downlink (DL) MIMO may be performed based on a plurality of 4G reception signals received from the 4G base station.

The 5G wireless communication module 460 may perform transmission and reception of 5G signals with a 5G base station through a 5G wireless communication network. Here, the 4G base station and the 5G base station may have a non-stand-alone (NSA) architecture. The 4G base station and the 5G base station may be arranged, for example, in the non-stand-alone (NSA) architecture. Alternatively, the 5G base station may be arranged in a stand-alone (SA) architecture at a separate location from the 4G base station. The 5G wireless communication module 460 may perform transmission and reception of 5G signals with a 5G base station through a 5G wireless communication network. In this instance, the 5G wireless communication module 460 may transmit at least one 5G transmission signal to the 5G base station. In addition, the 5G wireless communication module 460 may receive at least one 5G reception signal from the 5G base station. In this instance, 5G and 4G networks may use the same frequency band, and this may be referred to as LTE re-farming. In some examples, a Sub6 frequency band, which is a range of 6 GHz or less, may be used as the 5G frequency band. In contrast, a millimeter-wave (mmWave) band may be used as the 5G frequency band to perform wideband high-speed communication. When the mmWave band is used, the electronic device may perform beamforming for coverage expansion of an area where communication with a base station is possible.

Regardless of the 5G frequency band, in the 5G communication system, MIMO may be supported to be performed a plurality of times, to improve a transmission rate. In this instance, UL MIMO may be performed by a plurality of 5G transmission signals that are transmitted to a 5G base station. DL MIMO may be performed by a plurality of 5G reception signals that are received from the 5G base station.

In some examples, a state of dual connectivity (DC) with both the 4G base station and the 5G base station may be attained through the 4G wireless communication module 450 and the 5G wireless communication module 460. As such, the dual connectivity with the 4G base station and the 5G base station may be referred to as EUTRAN NR DC (EN-DC). In some examples, when the 4G base station and the 5G base station are disposed in a co-located structure, throughput improvement may be achieved by inter-carrier aggregation (inter-CA). Accordingly, when the 4G base station and the 5G base station are arranged in the EN-DC state, the 4G reception signal and the 5G reception signal may be simultaneously received through the 4G wireless communication module 450 and the 5G wireless communication module 460. Short-range communication between electronic devices (e.g., vehicles) may be performed between electronic devices (e.g., vehicles) using the 4G wireless communication module 450 and the 5G wireless communication module 460. In one embodiment, after resources are allocated, vehicles may perform wireless communication in a V2V manner without a base station.

In some embodiments, for transmission rate improvement and communication system convergence, carrier aggregation (CA) may be carried out using at least one of the 4G wireless communication module 450 and the 5G wireless communication module 460 and a WiFi communication module. In this regard, 4G + WiFi carrier aggregation (CA) may be performed using the 4G wireless communication module 450 and the WiFi communication module 113. Or, 5G + WiFi CA may be performed using the 5G wireless communication module 460 and the WiFi communication module.

In some examples, the communication device 400 may implement a display device for a vehicle together with a user interface device. In this instance, the display device for the vehicle may be referred to as a telematics apparatus or an audio video navigation (AVN) apparatus.

In some examples, a broadband transparent antenna structure that may be arranged on vehicle glass may be implemented with a single dielectric substrate on the same plane as a CPW feeder. In addition, the broadband transparent antenna structure that may be arranged on the vehicle glass may be implemented with a structure in which grounds are formed on both sides of a radiator, to constitute a broadband structure.

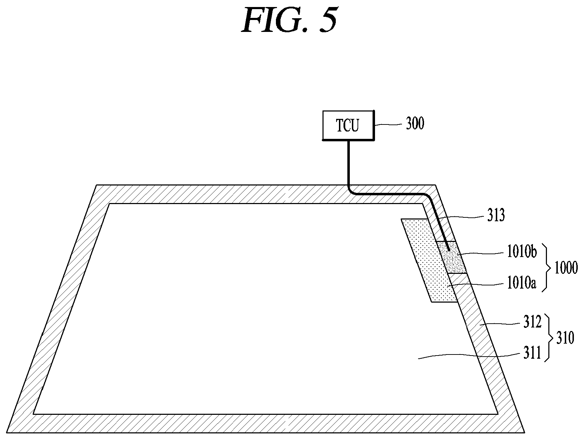

Hereinafter, an antenna assembly associated with a broadband transparent antenna structure according to the specification will be described. In this regard, FIG. 5 is a view of a configuration that an antenna assembly according to the disclosure is arranged on vehicle glass. Referring to FIG. 5, The antenna assembly 1000 may include an antenna region 1010a and a feeding region 1010b. The antenna region 1010a may be implemented as a transparent region and may be referred to as a transparent substrate. The feeding region 1010b may be implemented as an opaque region and may be implemented as an opaque substrate.

The glass panel 310 may be configured to include a transparent region 311 and an opaque region 312. The opaque region 312 of the glass panel 310 may be a frit region formed as a frit layer. The opaque region 312 may be formed to surround the transparent region 311. The opaque region 312 may be formed outside the transparent region 311. The opaque region 312 may form a boundary region of the glass panel 310.

A signal pattern formed on a dielectric substrate 1010 may be connected to a telematics control unit (TCU) 300 through a connector part 313, such as a coaxial cable. The TCU 300 may be mounted inside the vehicle, but is not limited thereto. The TCU 300 may be arranged on a dashboard inside the vehicle or a ceiling region inside the vehicle, but is not limited thereto.

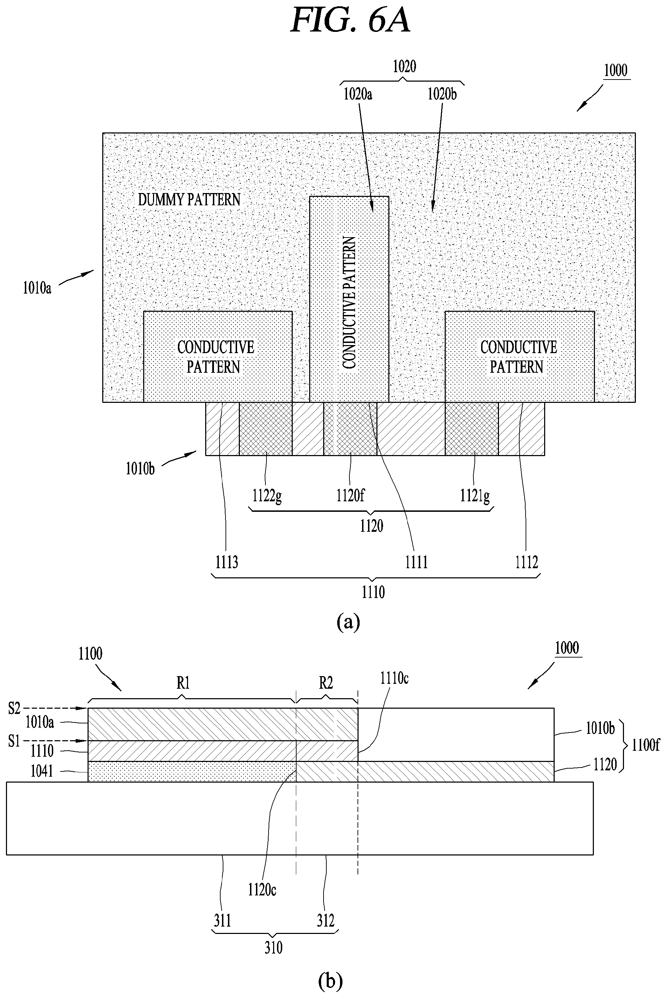

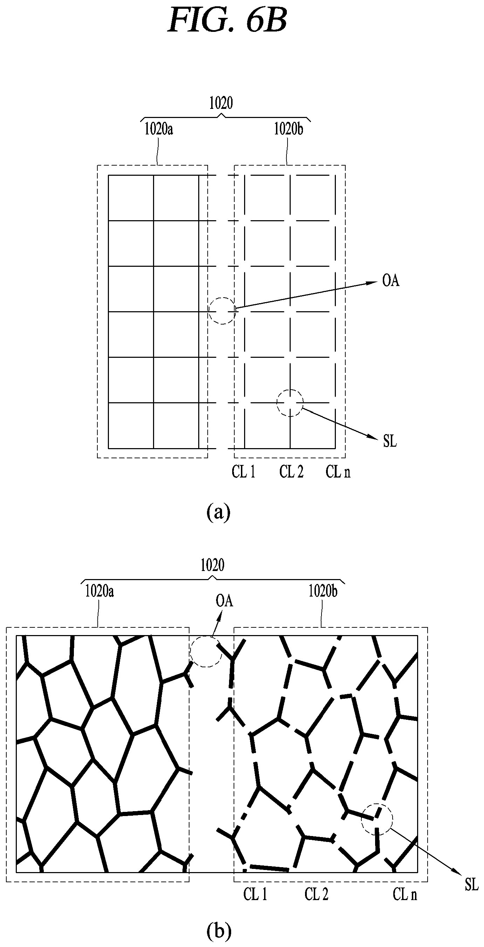

FIG. 6A is a view of a front side and a cross-section of a transparent antenna assembly according to the disclosure. FIG. 6B is a view of grid structures of a metal mesh radiator region and a dummy metal mesh region according to embodiments.

(a) of FIG. 6A is a front view of a transparent antenna assembly 1000, and (b) of FIG. 6A is a cross-sectional view of the transparent antenna assembly 1000, showing the layered structure of the transparent antenna assembly 1000. Referring to FIG. 6A, the antenna assembly 1000 may include a first transparent dielectric substrate 1010a and a second dielectric substrate 1010b. Conductive patterns 1110 that serve as a radiator may be arranged on one surface of the first transparent dielectric substrate 1010a. A feeding pattern 1120f and ground patterns 1121g and 1122g may be formed on one surface of the second dielectric substrate 1010b. The conductive patterns 1110 operating as the radiator may be configured to include one or more conductive patterns. The conductive patterns 1110 may include a first pattern 1111 connected to the feeding pattern 1120f, and a second pattern 1112 connected to the ground pattern 1121g. The conductive patterns 1110 may further include a third pattern 1113 connected to the ground pattern 1122g.

The conductive patterns 1110 constituting the antenna module may be implemented as a transparent antenna. Referring to FIG. 6B, the conductive patterns 1110 may be metal grid patterns 1020a with a certain line width or less to form a metal mesh radiator region. To maintain a certain level of transparency, dummy metal grid patterns 1020b may be formed in inner regions between adjacent patterns among the first to third patterns 1111, 1112, and 1113 of the conductive patterns 1100 or outer regions of them. The metal grid patterns 1020a and the dummy metal grid patterns 1020b may form a metal mesh layer 1020.

(a) of FIG. 6B illustrates a structure including typical metal grid patterns 1020a and dummy metal grid patterns 1020b. (b) of FIG. 6B illustrates a structure including atypical metal grid patterns 1020a and dummy metal grid patterns 1020b. As illustrated in (a) of FIG. B, the metal mesh layer 1020 may be formed in a transparent antenna structure by a plurality of metal mesh grids. The metal mesh layer 1020 may be formed in a typical metal mesh shape, such as a square shape, a diamond shape, or a polygonal shape. Conductive patterns may be configured such that the plurality of metal mesh grids operate as a feeding line or radiator. The metal mesh layer 1020 may constitute a transparent antenna region. As one example, the metal mesh layer 1020 may have a thickness of about 2 mm, but is not limited thereto.

The metal mesh layer 1020 may include the metal grid patterns 1020a and the dummy metal grid patterns 1020b. The metal grid patterns 1020a and the dummy metal grid patterns 1020b may have ends disconnected from each other to form opening areas OA, thereby being electrically disconnected. The dummy metal grid patterns 1020b may have slits SL formed so that ends of mesh grids CL1, CL2, ..., CLn are not connected.

Referring to (b) of FIG. 6B, the metal mesh layer 1020 may be formed by a plurality of atypical metal mesh grids. The metal mesh layer 1020 may include the metal grid patterns 1020a and the dummy metal grid patterns 1020b. The metal grid patterns 1020a and the dummy metal grid patterns 1020b may have ends disconnected from each other to form the opening areas OA, thereby being electrically disconnected. The dummy metal grid patterns 1020b may have slits SL formed so that ends of mesh grids CL1, CL2, ..., CLn are not connected.

In some embodiments, a transparent antenna module that is operable in a wide band by being arranged on vehicle glass may be implemented on the vehicle glass. In relation to this, as communication technologies are developed from 4G (LTE) to 5G communications, antennas for vehicle continuously demand network expandability from the related art FM/AM antennas or LTE antennas to 5G antennas or V2X antennas. However, 5G signals exhibit high linearity as frequencies rise, and when there is an obstacle, it may lead to a signal loss. Materials with low dielectric constant and low dielectric loss are required to minimize signal loss in 5G frequency bands. In this regard, the signal loss may be determined in proportion to the frequency, the square root of the dielectric constant, and the dielectric loss.

Therefore, there are various requirements for implementing antennas, for example, network expandability capable of supporting future high-speed communication, design flexibility not to interfere with the design of the vehicle, installation facilitation to be actually mounted on the vehicle, and the like, as well as antenna performance including the signal loss. Therefore, a technology proposed herein relates to a transparent antenna for a vehicle that satisfies these future communication requirements.

Typically, a transparent antenna for a vehicle may minimize signal loss owing to invisible installation on vehicle glass, and may also be expanded to a 5G or V2X antenna without limit to installation area and space. The transparent antenna has an advantage of not spoiling the appearance of the vehicle, and it is necessary that the transparent antenna is applicable to various types of vehicles.

Therefore, to maximize the advantages of transparent antennas, this specification proposes a transparent antenna structure and material that may be implemented at low cost without being visually recognized by a driver's field of view or from outside. One aspect of the disclosure is to solve the aforementioned problems and other drawbacks. Another aspect is to implement a vehicle antenna that is capable of being attached to vehicle glass and performing 5G and V2X communications.

Another aspect of this specification is to provide a transparent antenna structure and material that is capable of being implemented at low cost without being visually recognized by a driver's field of view or from outside, to maximize the advantages of a transparent antenna. Another aspect of this specification is to implement a transparent antenna module that is capable of being installed on side glass, front glass, sunroof, rear glass, side mirror, headlamp, and the like of a vehicle, so as to allow the antenna to be arranged without restriction by the design of the vehicle.

Another aspect of this specification is to propose a transparent antenna module that is capable of maintaining stable antenna performance even under changes in internal/external vehicle environments. Another aspect of this specification is to minimize an occurrence of signal loss in a communication frequency band when receiving a communication signal through glass inside a vehicle by implementing each material in an antenna stack structure as a low-loss material and structure.

Another aspect of this specification is to implement a transparent antenna to be heat-resistant and have an anti-yellowing function because the antenna is easily exposed to high temperature and UV due to sunlight. Another aspect of this specification is to improve transmittance of an antenna element without obscuring fields of view of a driver and a passenger. Another aspect of this specification is to solve a problem with reduced transmittance and identification of an edge of a substrate to the naked eye by forming a transparent electrode layer on a transparent substrate. Another aspect of this specification is to implement a transparent antenna module that is capable of minimizing an edge region where an opaque region of vehicle glass is formed.

Another aspect of this specification is to implement a transparent antenna module that is capable of improving antenna element transmittance and making an edge region of an antenna substrate as invisible as possible. Another aspect of this specification is to simplify a manufacturing process and reduce manufacturing costs by avoiding the use of a separate antenna substrate layer on which an antenna pattern is formed.

To achieve those aspects, a transparent antenna module may be expanded from an opaque region of vehicle glass to a transparent region. Accordingly, a transparent antenna module that is implemented continuously from the opaque region of the vehicle glass to the transparent region may be referred to as a seamless transparent antenna structure.

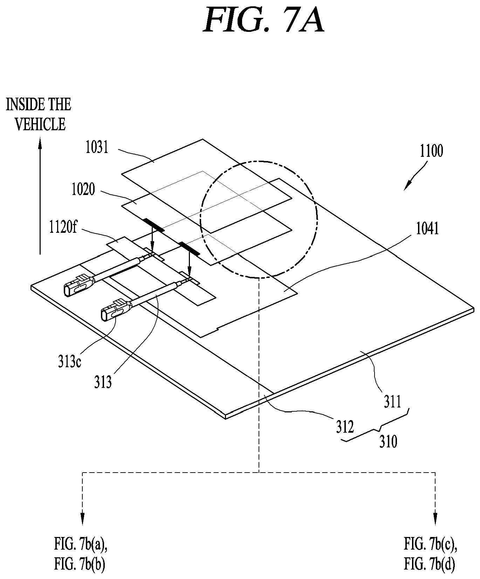

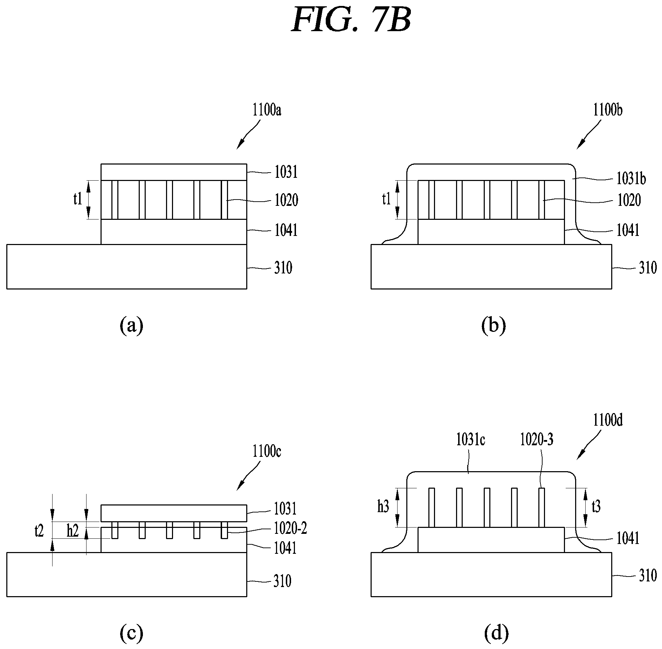

In this regard, FIG. 7A is an exploded perspective view of a structure in which a transparent antenna module according to this specification is stacked on vehicle glass. FIG. 7B is a lateral view of antennas in which the transparent antenna module of FIG. 7A is implemented according to different embodiments.

A seamless transparent antenna structure proposed in this specification is as illustrated in FIG. 7A. In this regard, the seamless transparent antenna structure may be installed inside front glass, rear glass, side glass, or sunroof of the vehicle as illustrated in FIG. 1A. An edge region of a vehicle glass 310 may be formed as an opaque region 312, such as a black mask. Accordingly, a Fakra connector 313c may be arranged in the opaque region 312 of the vehicle glass 310 and a transparent antenna may be arranged inside a transparent region 311 which is an inner region of the vehicle glass 310. A feed line connecting the transparent antenna and the Fakra connector 313c may be arranged in the opaque region 312, such as the black mask, or the transparent region 311 depending on the application.

Referring to FIG. 7A, a conductive pattern layer 1020 may be stacked in the transparent region 311 of the vehicle glass. The conductive pattern layer 1020 may be implemented with the metal mesh grid structure of FIG. 6B and thus may be referred to as a metal mesh layer 1020. A transparent cover layer 1031 may be formed in an upper region of the conductive pattern layer 1020.

The conductive pattern layer 1020 may be arranged in the transparent region 311 of the vehicle glass. At least a portion of the feeding pattern 1120f may be arranged in the opaque region 312 of the vehicle glass. A transparent antenna module 1100 may include the conductive pattern layer 1020 and an adhesive layer 1041 formed between the conductive pattern layer 1020 and the vehicle glass 310. The transparent antenna module 1100 may further include a feeding pattern 1120f. In this regard, at least a portion of the feeding pattern 1120f may be formed transparently and arranged in the transparent region 311.

The opaque region 312 may have lower transmittance than the transparent region 311 and may be referred to as a black matrix (BM) region or a black mask region. One end portion of a conductive pattern formed on the conductive pattern layer 1020 may be electrically connected to one end portion of the feeding pattern 1120f. A connector element 313 having a connector 313c formed on one end portion may be connected to another end portion of the feeding pattern 1120f. The connector element 313 may be implemented as an RF cable, such as a Fakra cable, but is not limited thereto.

(a) of FIG. 7B illustrates a transparent antenna module 1100a of a first structure in which the adhesive layer 1041 is formed on an upper portion of the vehicle glass 310 and the conductive pattern layer 1020 is formed on an upper portion of the adhesive layer 1041. The transparent antenna module 1100a of the first structure may have a transparent cover layer 1031 arranged on an upper portion of the conductive pattern layer 1020. The conductive pattern layer 1020 may be formed as the conductive pattern layer 1020 of the first structure in which a dielectric material is filled between metal mesh grids. The conductive pattern layer 1020 of the first structure may have a first thickness t1.

(b) of FIG. 7B illustrates a transparent antenna module 1100b of a second structure in which the adhesive layer 1041 is formed on an upper portion of the vehicle glass 310 and the conductive pattern layer 1020 is formed on an upper portion of the adhesive layer 1041. Unlike the transparent antenna module 1100a of the first structure, the transparent antenna module 1100b of the second structure illustrated in (b) of FIG. 7B may not have a transparent cover layer. In this regard, a transparent coating layer 1031b may be arranged on the upper portion of the conductive pattern layer 1020. The conductive pattern layer 1020 may be formed as the conductive pattern layer of the first structure in which the dielectric material is filled between the metal mesh grids. The conductive pattern layer 1020 of the first structure may have the first thickness t1.

(c) of FIG. 7B illustrates a transparent antenna module 1100c of a third structure in which the adhesive layer 1041 is formed on an upper portion of the vehicle glass 310 and a conductive pattern layer 1020-2 is formed on an upper portion of the adhesive layer 1041. The transparent antenna module 1100c of the third structure may have a transparent cover layer 1031 arranged on an upper portion of the conductive pattern layer 1020-2. The conductive pattern layer 1020-2 may be formed as a conductive pattern layer of a second structure in which a dielectric material is not filled between metal mesh grids. A lower end portion of the conductive pattern layer 1020-2 of the second structure may be inserted into an inner region of the adhesive layer 1041 by a certain thickness. The conductive pattern layer 1020-2 of the second structure may have a second thickness t2. The conductive pattern layer 1020-2 of the second structure may be inserted into the inner region of the adhesive layer 1041, and thus have a second height h2.

(d) of FIG. B illustrates a transparent antenna module 1100d of a fourth structure in which the adhesive layer 1041 is formed on an upper portion of the vehicle glass 310 and a conductive pattern layer 1020-3 is formed on an upper portion of the adhesive layer 1041. The transparent antenna module 1100d of the fourth structure may have a transparent coating layer 1031c arranged on an upper portion of the conductive pattern layer 1020-2. The conductive pattern layer 1020-2 may be formed as a conductive pattern layer of a third structure in which a dielectric material is not filled between metal mesh grids. A lower end portion of the conductive pattern layer 1020-2 of the third structure may be formed to be in contact with a front surface of the adhesive layer 1041. Accordingly, the lower end portion of the conductive pattern layer 1020-2 of the third structure may be in contact with the adhesive layer 1041 without being inserted into the inner region of the adhesive layer 1041 by a thickness. The conductive pattern layer 1020-3 of the third structure may have a third thickness t3. The conductive pattern layer 1020-3 of the third structure may be formed on a front surface of the adhesive layer 1041 to have a third height h3.

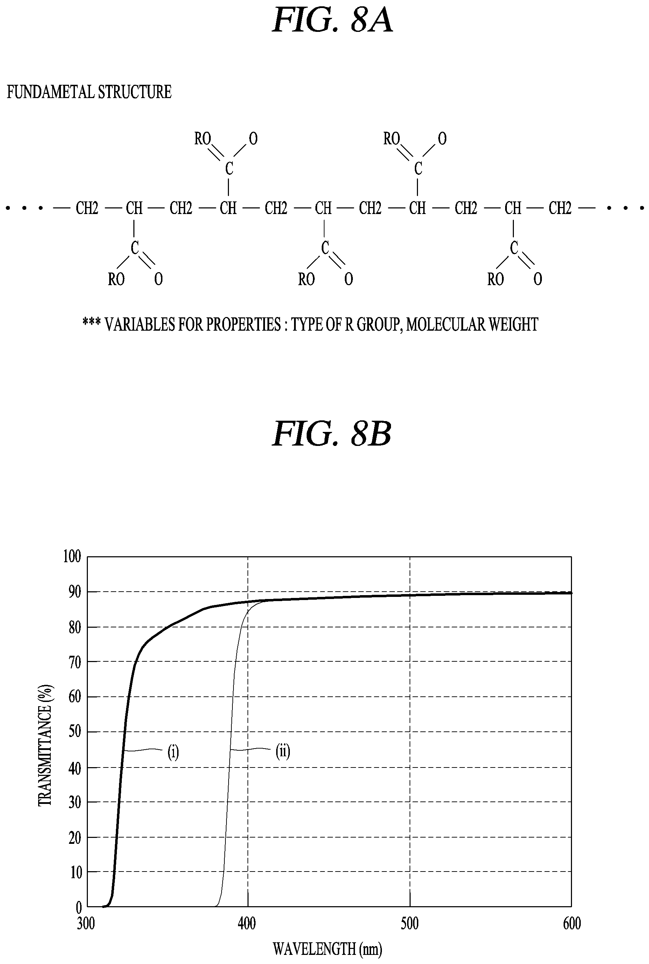

In some embodiments, the adhesive layer of the transparent antenna module according to the specification may be implemented with a plurality of materials to be attachable to vehicle glass and cut ultra-violet (UV) rays. In this regard, FIG. 8A is a view of an acrylic adhesive structure forming an adhesive layer according to the disclosure. FIG. 8B is a view of transmittance according to wavelengths of an adhesive according to this specification, in which a UV-cutting inorganic material is mixed with an acrylic adhesive in a certain ratio, and a typical adhesive to which an inorganic material is not added.

Referring to FIGS. 7A to 8A, the conductive pattern layer 1020 may be directly coupled to the adhesive layer 1041 without a separate dielectric substrate in an upper region of the adhesive layer 1041, thereby forming a transparent antenna structure. The transparent antenna structure may utilize a transparent electrode or a metal mesh grid. The transparent electrode may include various materials and structures, such as indium tin oxide (ITO), carbon nanotube (CNT), nano-silver wire, and metal mesh.

According to an embodiment, a transparent electrode may be implemented with a metal mesh grid structure that may minimize signal loss, may have lowest resistance, and may be manufactured at relatively low manufacturing costs. When the metal mesh grids made of copper are implemented to have a thickness of at least 1 mm, the metal mesh grid may be formed with low supporting force in a height direction. Accordingly, in this specification, a dielectric material, such as resin or optical clear adhesive (OCA), may be filled between the metal mesh grids, thereby reinforcing the mechanical properties of the transparent antenna structure. In some examples, the metal mesh material may be made of at least one of copper (Cu), silver (Ag), and nano-silver. A transparent cover layer 1031 may be arranged, as illustrated in (a) and (c) of FIG. 7B, to protect the conductive pattern layer 1020 of the metal mesh grid structure from the outside. As another example, the transparent coating layers 1031b and 1031c each having an insulating property may be formed in the upper and/or side regions of the conductive pattern layer 1020, as illustrated in (b) and (d) of FIG. 7B.

The transparent cover layer 1031 according to the specification may be implemented with a PET or COP material having at least a certain level of heat resistance. In this regard, when a material thickness of the transparent cover layer 1031 is formed thin below a first threshold thickness, the transparent cover layer 1031 may not be faithfully configured as a protective layer. In some embodiments, when the material thickness of the transparent cover layer 1031 is thicker than or equal to a second threshold thickness, the transmittance of the transparent antenna module may be reduced. Therefore, the thickness of the transparent cover layer 1031 of the transparent antenna module according to the specification may be in a range of 20 mm to 80 mm.

When the metal mesh grids made of copper are formed with a thickness of 1 mm or less, the metal mesh grids may generate a supporting force of at least a certain level. In this regard, the conductive pattern layer 1020 forming the antenna pattern as illustrated in (c) and (d) of FIG. 7B may be configured so that resin or OCA is not filled between the metal mesh grids. The adhesive layer 1020 may be bonded directly to the rear surface of the conductive pattern layer 1020, thereby simplifying an antenna structure. Accordingly, the dielectric material, such as resin or OCA, may not be required, which may result in simplifying a transparent antenna manufacturing process and reducing manufacturing costs.

To minimize an overall height of the transparent antenna module, an antenna having a metal mesh grid structure may be configured on the upper portion of the adhesive layer 1041, as illustrated in (d) of FIG. 7B, and the transparent coating layer 1031c may be arranged to cover the conductive pattern layer 1020. Accordingly, a seamless transparent antenna structure with improved invisibility may be implemented by minimizing the overall thickness of the transparent antenna module.

Hereinafter, a detailed description will be given of a method for implementing the structures of the conductive pattern layers 1020, 1020-2, and 1020-2 each having the metal mesh grid structure. The transparent antenna module may have a structure in which an antenna pattern and resin (or OCA) are arranged on an adhesive or adhesive film on the vehicle glass 310, as illustrated in (a) and (b) of FIG. 7B. The adhesive of the adhesive layer 1041 proposed in this specification may be an acrylic material. The acrylic material may include materials containing COOH and OH bonds, as illustrated in FIG. 8A. By mixing an additive that may perform a UV cutting function into the adhesive, a UV-cutting adhesive may be applied. In this specification, the UV-cutting adhesive may be made by adding an inorganic material containing a benzotriazole-based polymer, a triazole-based polymer, or SiO₂ (or TiO₂), which may absorb UV rays, to the acrylic adhesive. When each additive is mixed by less than 1%, a UV-cutting effect may be insufficient. In another example, when each additive is mixed by at least 30%, bonding characteristics may be lowered. Therefore, it may be appropriate that the additive is added by 1 to 30 wt%. Components of each additive may be analyzed through composition analysis (EDS, XPS) or phase analysis (FTIR, Raman).

Referring to FIGS. 7A to 8A, the adhesive layer 1041 may have an acrylic adhesive structure having a chemical formula of FIG. 8A. The acrylic adhesive structure may be a structure in which a carboxyl group (RCOOH) is formed by bonding a carboxylic acid salt (RCCO-) to -CH in a -CH2-CH-CH2-bonding structure. The adhesive layer 1041 may be formed by mixing an inorganic material of at least 1 wt% into the acrylic adhesive to cut UV rays. An inorganic material may be mixed in an amount of 30 wt% or less so that the acrylic adhesive may be bonded to the vehicle glass 310. The inorganic material may be configured to cut at least a certain percentage of UV rays in a wavelength band between 330 nm and 380 nm. For this purpose, the inorganic material may include a benzotriazole-based polymer, a triazole-based polymer, or SiO₂ or TiO₂.

Referring to FIGS. 7A to 8B, the adhesive layer 1041 in which the inorganic material is mixed with the acrylic adhesive may have a UV transmittance of 1% or less in the wavelength band between 330 nm and 380 nm. Therefore, it may be confirmed that UV is cut by at least 99% by the adhesive layer 1041 in which the inorganic material is mixed with the acrylic adhesive. In case of general adhesives that are not mixed with inorganic materials, the UV transmittance in the wavelength band between 350 nm and 380 nm may be approximately 80% or more. Accordingly, a UV cutting rate of general adhesives that are not mixed with inorganic materials may be 20% or less.

In this regard, the adhesive layer 1041 may perform a bonding function as an adhesive while cutting at least 99% of UV rays in the wavelength band of 330 nm to 380 nm. As described above, FIG. 8B illustrates the wavelength-dependent transmittance results of (i) a general adhesive and (ii) the adhesive proposed in the specification. When using the general adhesive, it may be seen that light is transmitted in a UV band, for example, in the wavelength band of 330 nm to 380 nm. This may damage polymers located inside an antenna, causing yellowing. It may be confirmed that most UV rays are cut in the UV band when the adhesive proposed in this specification is used. Therefore, it may be expected that antenna yellowing may be suppressed even when the vehicle is continuously exposed to light.

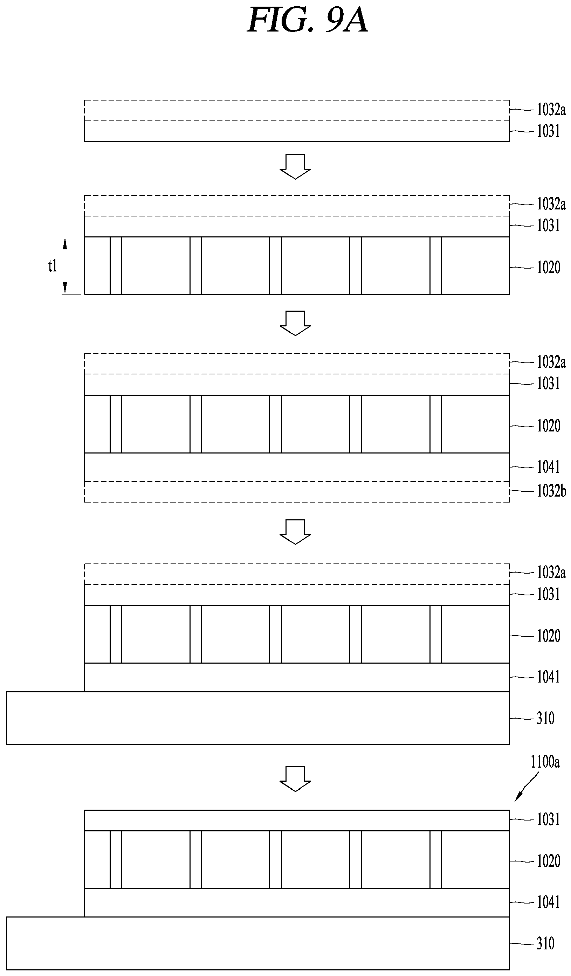

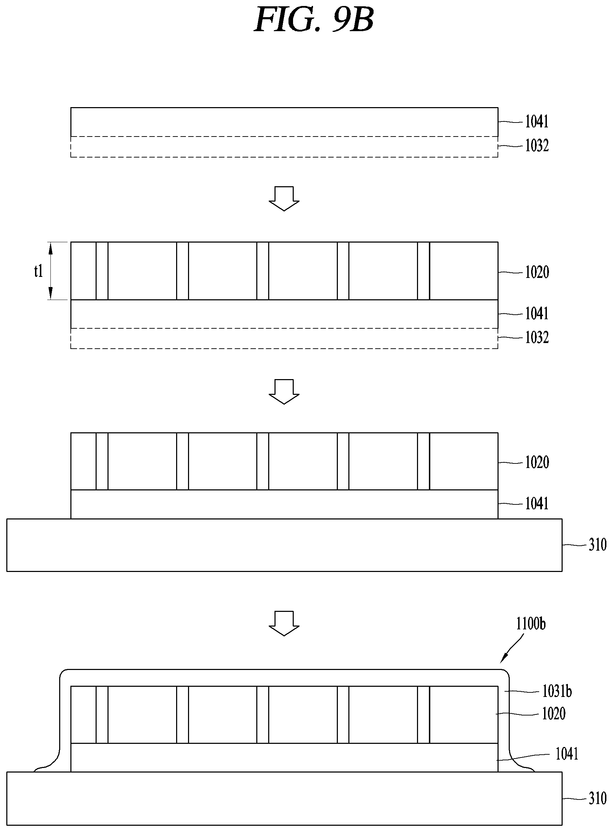

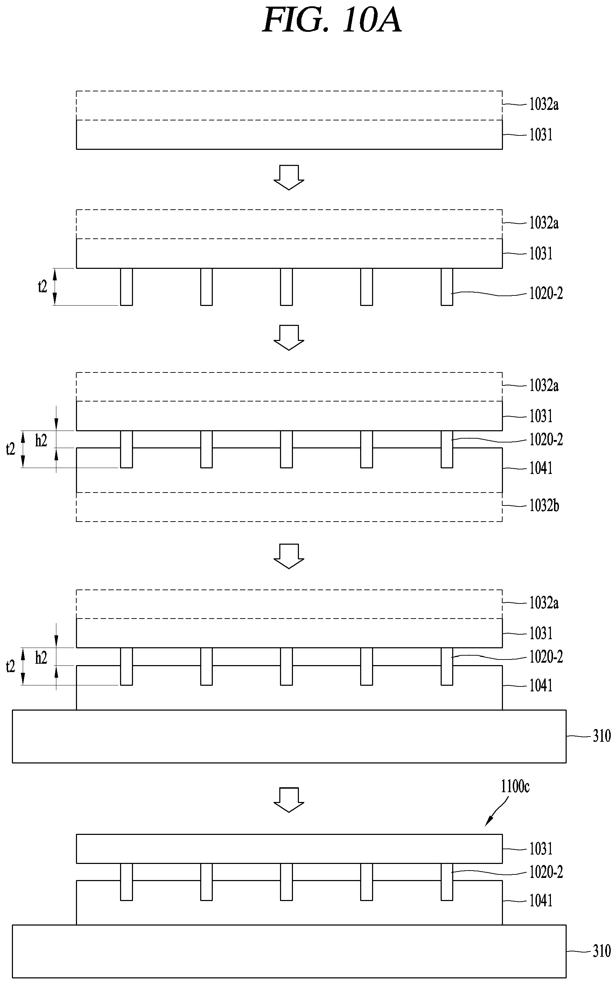

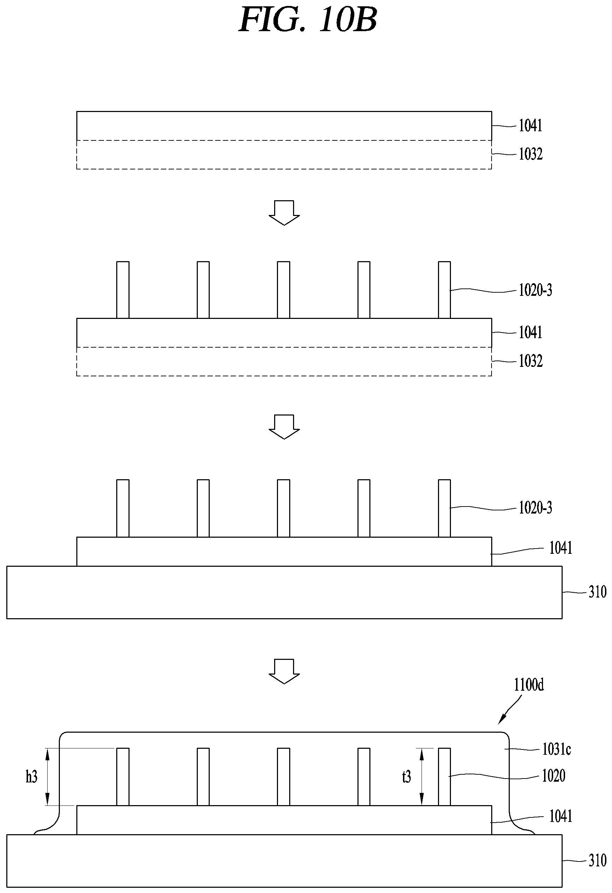

Hereinafter, a process of manufacturing a transparent antenna module according to various embodiments will be described. In this regard, FIGS. 9A and 9B are views of a process of manufacturing a transparent antenna module in which a conductive pattern layer is formed with a dielectric material filled between metal grids. FIGS. 10A and 10B are views of a process of manufacturing a transparent antenna module in which a conductive pattern layer is formed without filling a dielectric material between metal grids.

Hereinafter, a transparent antenna module according to the specification will be described with reference to FIGS. 6A to 10B. A transparent antenna module 1100 may include a conductive pattern layer 1020 and an adhesive layer 1031. The conductive pattern layer 1020 may include metal mesh grids that are formed at a first interval in one axial direction and have a first thickness in a height direction. A radiator of the conductive pattern layer 1020 including the metal mesh grids may be configured to radiate a wireless signal of a specific frequency band.

As illustrated in FIG. 6A, the conductive pattern layer 1020 (the transparent electrode layer or metal mesh layer) may be formed at a certain interval in a horizontal axis direction and/or a vertical axis direction. The metal mesh layer 1020 may include metal grid patterns 1020a and dummy metal grid patterns 1020b. The metal grid patterns 1020a may be interconnected to form an antenna region. The dummy metal grid patterns 1020b may be formed spaced apart from each other to form a dielectric region, which is an outer region of the antenna region.

The adhesive layer 1041 may have a front surface that is coupled to a lower end portion of the conductive pattern layer 1020. The adhesive layer 1041 may have a rear surface that is attached to the glass of the vehicle. The lower end portion of the conductive pattern layer 1020 may be in contact with the front surface of the adhesive layer 1041 as illustrated in FIGS. 9A, 9B, and 10B. As another example, the lower end portion of the conductive pattern layer 1020 may extend up to an inner region of the front surface of the adhesive layer 1041 as illustrated in FIG. 10A.

The adhesive layer 1041 may be formed to cut UV rays in a wavelength band between 330 nm and 380 nm by at least a certain percentage, as illustrated in FIG. 8B. The adhesive layer 1041 may be formed by adding an inorganic material, containing a benzotriazole-based polymer, a triazole-based polymer, or SiO₂ or TiO₂, to an acrylic adhesive. In the adhesive layer 1041, the inorganic material may be mixed in an amount of at least 1 wt% for UV cutting. In the adhesive layer 1041, the inorganic material may be mixed in an amount of 30 wt% or less, to be bonded to the vehicle glass 310.

The adhesive layer 1041 may have a height of at least 10 um to be adhered to the vehicle glass 310. The height of the adhesive layer 1041 may be 100 um or less so that the transparent antenna module obtains transmittance of at least a threshold value. In some embodiments, the frequency-dependent signal loss characteristics of the transparent antenna module may change depending on the height of the adhesive layer 1041.

Referring to FIG. 7A, (a) of FIG. 7B, and FIG. 9A, a first guide film 1032a may be formed on an upper region of a transparent cover layer 1031. The conductive pattern layer 1020 may be formed in a lower region of the first guide film 1032a. The conductive pattern layer 1020 may be formed as a first structure in which a dielectric material is filled between metal mesh grids. A thickness of the dielectric material may be the same as a first thickness of the conductive pattern layer 1020. In this regard, unlike the case where a conductive pattern is formed in an upper region of a dielectric substrate or is formed with a thickness thinner than that of a dielectric material, the thickness of the dielectric material may be the same as the first thickness of the conductive pattern layer 1020. Accordingly, an overall height of the transparent antenna module may be minimized by minimizing the thickness of the dielectric material.

Antenna efficiency may also be improved because a separate ground region is not formed in the lower region of the conductive pattern layer 1020. In this regard, the transparent antenna module may be implemented with a CPW antenna structure in which both an antenna pattern and a ground pattern are formed on a single layer of the conductive pattern layer 1020. There may be an advantage in that the antenna efficiency may be improved while minimizing the overall height of the antenna module according to the CPW antenna structure and the conductive pattern layer 1020 formed with the same thickness as the dielectric material.

A transparent antenna module 1100a may further include a transparent cover layer 1031, a first guide film 1032a, and a second guide film 1032b in addition to the conductive pattern layer 1020 and the adhesive layer 1041. The transparent cover layer 1031 may be coupled to an upper end portion of the conductive pattern layer 1020 filled with the dielectric material. The first guide film 1032a may have a rear surface coupled to a front surface of the transparent cover layer 1031. The second guide film 1032b may have a front surface coupled to a rear surface of the adhesive layer 1041. The first guide film 1032a and the second guide film 1032b may be removed in case that the transparent antenna module is adhered to the vehicle glass 310.

The transparent antenna module 1100a of the first structure may include the adhesive layer 1041 formed on the upper portion of the vehicle glass 310 and the conductive pattern layer 1020 formed on the upper portion of the adhesive layer 1041. The transparent antenna module 1100a of the first structure may have a transparent cover layer 1031 arranged on an upper portion of the conductive pattern layer 1020. The conductive pattern layer 1020 may be formed as the conductive pattern layer 1020 of the first structure in which the dielectric material is filled between the metal mesh grids. The conductive pattern layer 1020 of the first structure may have a first thickness t1.

Referring to FIG. 7A, (b) of FIG. 7B, and FIG. 9B, the conductive pattern layer 1020 may be formed as a first structure in which a dielectric material is filled between metal mesh grids. A thickness of the dielectric material may be the same as the first thickness T1 of the conductive pattern layer 1020. The transparent antenna module 1100b may further include a transparent coating layer 1031b and a guide film 1032 in addition to the conductive pattern layer 1020 and the adhesive layer 1041. In this regard, the guide film 1032 may be formed on the rear surface of the adhesive layer 1041 before forming the conductive pattern layer 1020. The conductive pattern layer 1020 may be formed in an upper region of the adhesive layer 1041 on which the guide film 1032 is formed.

The guide film 1032 may be formed between the conductive pattern layer 1020 of the first structure filled with the dielectric material and the adhesive layer 1041. The transparent coating layer 1031b may be formed in the upper region of the conductive pattern layer 1020 of the first structure filled with the dielectric material. The guide film 1032 may be removed when the transparent antenna module is adhered to the vehicle glass 310. The transparent coating layer 1031b may be formed in the upper region and side regions of the conductive pattern layer 1020. The transparent coating layer 1031b may be formed to extend to the side regions of the adhesive layer 1041.

A transparent antenna module 1100b of a second structure may include the adhesive layer 1041 formed on the upper portion of the vehicle glass 310 and the conductive pattern layer 1020 formed on the upper portion of the adhesive layer 1041. The transparent antenna module 1100b of the second structure may not include a transparent cover layer. In some embodiments, the transparent coating layer 1031b may also be arranged on the upper portion of the conductive pattern layer 1020. The conductive pattern layer 1020 may be formed as the conductive pattern layer of the first structure in which the dielectric material is filled between the metal mesh grids. The conductive pattern layer 1020 of the first structure may have the first thickness t1.

Referring to FIG. 7A, (c) of FIG. 7B, and FIG. 10A, the first guide film 1032a may be formed in the upper region of the transparent cover layer 1031. A conductive pattern layer 1020-2 may be formed in the lower region of the transparent cover layer 1031. The conductive pattern layer 1020-2 may be formed as the conductive pattern layer of the second structure in which the dielectric material is not filled between the metal mesh grids. A lower end portion of the conductive pattern layer 1020-2 of the second structure may be inserted into an inner region of the adhesive layer 1041 by a certain thickness. The conductive pattern layer 1020-2 of the second structure may have a second thickness t2. The conductive pattern layer 1020-2 of the second structure may be inserted into the inner region of the adhesive layer 1041, and thus have a second height h2. The adhesive layer 1041 having the conductive pattern layer 1020-2 of the second structure inserted therein may be attached to the vehicle glass 310.

A transparent antenna module 1100c of a third structure may have the adhesive layer 1041 formed on the upper portion of the vehicle glass 310 and the conductive pattern layer 1020-2 formed on the upper portion of the adhesive layer 1041. The transparent antenna module 1100c of the third structure may have the transparent cover layer 1031 arranged on the upper portion of the conductive pattern layer 1020-2.

Referring to FIG. 7A, (d) of FIG. 7B, and FIG. 10B, the transparent antenna module 1100d may further include a transparent coating layer 1031b and a guide film 1032 in addition to the conductive pattern layer 1020 and the adhesive layer 1041. In this regard, the guide film 1032 may be formed on the rear surface of the adhesive layer 1041 before forming a conductive pattern layer 1020-3. The conductive pattern layer 1020-3 may be formed in an upper region of the adhesive layer 1041 on which the guide film 1032 is formed.

The guide film 1032 may be formed between the conductive pattern layer 1020-3 of the third structure, which is not filled with the dielectric material, and the adhesive layer 1041. The transparent coating layer 1031c may be formed in the upper region of the conductive pattern layer 1020-3 of the third structure filled with the dielectric material. The guide film 1032 may be removed when the transparent antenna module is adhered to the vehicle glass 310. The transparent coating layer 1031c may be formed in the upper region and side regions of the conductive pattern layer 1020-3 of the third structure. The transparent coating layer 1031b may be formed to extend to the side regions of the adhesive layer 1041.

A transparent antenna module 1100d of a fourth structure may include the adhesive layer 1041 formed on the upper portion of the vehicle glass 310 and the conductive pattern layer 1020-3 formed on the upper portion of the adhesive layer 1041. The transparent antenna module 1100d of the fourth structure may include the transparent coating layer 1031c arranged on the upper portion of the conductive pattern layer 1020-2. The conductive pattern layer 1020-2 may be formed as the conductive pattern layer of the third structure in which the dielectric material is not filled between the metal mesh grids. A lower end portion of the conductive pattern layer 1020-2 of the third structure may be formed to be in contact with a front surface of the adhesive layer 1041. Accordingly, the lower end portion of the conductive pattern layer 1020-2 of the third structure may be in contact with the adhesive layer 1041 without being inserted into the inner region of the adhesive layer 1041 by the thickness. The conductive pattern layer 1020-3 of the third structure may have a third thickness t3. The conductive pattern layer 1020-3 of the third structure may be formed on the front surface of the adhesive layer 1041 to have a third height h3.

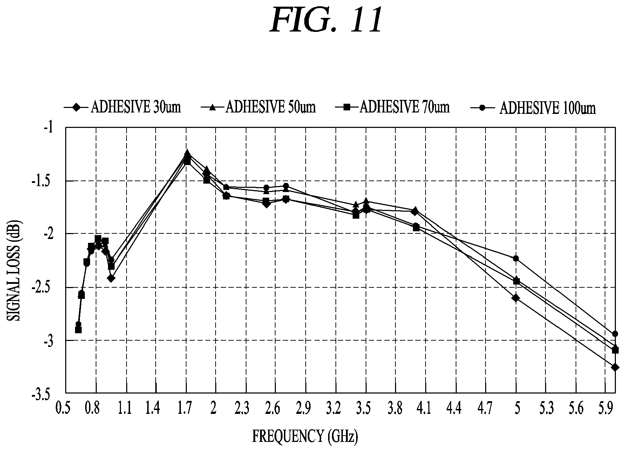

In this regard, FIG. 11 is a view of signal loss characteristics according to changes in height of an adhesive layer of a transparent antenna module according to the specification on vehicle glass. Referring to FIG. 7A and FIGS. 9A to 11, the height (thickness) of the adhesive layer 1041 may be limited to a value in a certain range and the signal loss characteristics may be limited within a certain range. For example, when the height (thickness) of the adhesive layer 1041 is formed in a range of 30 um to 100 um, a signal loss of -3 dB or less may be caused in a frequency band of 0.6 to 3.5 GHz. It may be confirmed that the signal loss is in a nearly certain range when the height (thickness) of the adhesive layer 1041 is in the range of 30 um to 100 um in the frequency band of 0.6 to 3.5 GHz.

However, when the height of the adhesive layer 1041 is set to a value of 30 um or less in a frequency band of approximately at least 5.6 GHz, the signal loss value may increase to at least -3 dB. Accordingly, the height of the adhesive layer 1041 may be formed to be at least 50 um so that the signal loss characteristic is below a threshold value in a frequency band of 0.6 GHz to 6 GHz. The height of the adhesive layer 1041 may be formed to be 100 um or less so that the transmittance of the transparent antenna module is equal to or higher than a threshold value.

In some embodiments, when a frequency band is set to a 0.6 GHz to 5 GHz, the height of the adhesive layer 1041 may be set to a range of 10 um to 100 um. The adhesive layer 1041 may be made of an acrylic adhesive or a silicone adhesive. As described above, the adhesive layer 1041 of 10 mm or less may not be easily adhered to the vehicle glass and may have lowered signal loss characteristics. In some embodiments, the adhesive layer 1041 of at least 100 mm may lower the transmittance of the transparent antenna module. Accordingly, the adhesive layer 1041 of at least 100 mm may deteriorate the invisible characteristics of the transparent antenna module. The non-visible characteristics of the transparent antenna module may be characteristics that the conductive pattern layer including the metal mesh grids is not distinguishable by the naked eye from the transparent region of glass where the conductive pattern layer is not formed.

In some embodiments, the transparent antenna module according to the specification may be configured such that the conductive pattern layer is coupled directly to the adhesive layer, allowing minimization of the overall height of the antenna module and improvement of the transparency of the antenna module, compared to a case including a separate dielectric structure. Therefore, it may be necessary to compare the antenna performance of the first structure in which the conductive pattern layer is directly coupled to the adhesive layer and the antenna performance of the second structure in which a separate dielectric structure is arranged between the conductive pattern layer and the adhesive layer. In case that the antenna performance of the first structure is similar to that of the second structure, the selection of the antenna with the first structure may be advantageous when considering the overall height and transparency of the antenna module.

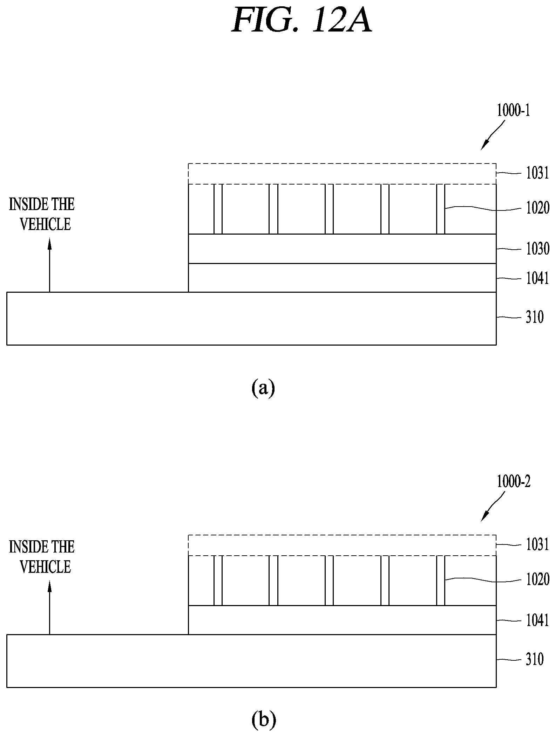

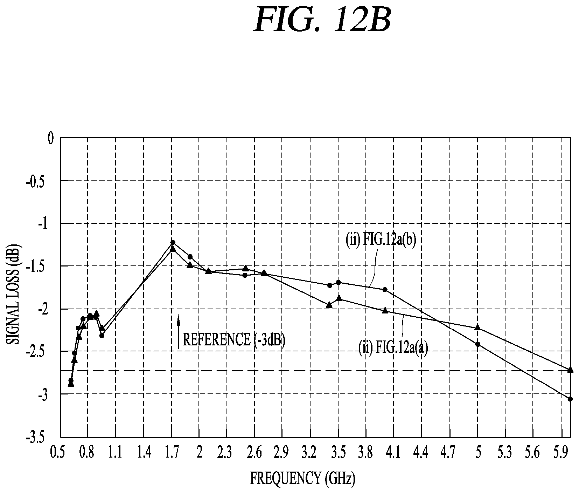

In this regard, FIG. 12A is a lateral view of a first antenna structure including a separate dielectric structure between a conductive pattern layer and an adhesive layer and a second antenna structure in which the conductive pattern layer and the adhesive layer are directly coupled. FIG. 12B compares frequency-based signal loss characteristics of the first antenna structure and the second antenna structure of FIG. 12A. FIG. 12B shows the signal loss characteristics in dB units in a frequency band of about 0.6 GHz to 6 GHz, including the 5G Sub6 frequency band.

Referring to (a) of FIG. 12A, the first antenna structure 1100-1 may include a transparent cover layer 1031 and a dielectric layer 1033 formed in the upper and lower regions of the conductive pattern layer 1020. A dielectric material, such as resin, may be filled between the metal mesh grids of the conductive pattern layer 1020, but is not limited thereto and may be formed as the structure as illustrated in (c) or (d) of FIG. 7B. The adhesive layer 1041 may be formed in a lower region of the dielectric layer 1033, and the rear surface of the adhesive layer 1041 may be attached to the vehicle glass 310. Accordingly, as the separate dielectric layer 1033 is formed between the conductive pattern layer 1020 and the adhesive layer 1041 in the first antenna structure 1100-1, the overall antenna height may increase. In some embodiments, the adhesive layer 1041 may be formed as a detachable adhesive to be attached to and detached from the vehicle glass 310. The first antenna structure 1100-1 may be attached to the inner region of the vehicle glass 310 to transmit a wireless signal into the interior of the vehicle.

Referring to (b) of FIG. 12A, the second antenna structure 1100-2 may include a transparent cover layer 1031 and an adhesive layer 1041 formed in the upper and lower regions of the conductive pattern layer 1020. A dielectric material, such as resin, may be filled between the metal mesh grids of the conductive pattern layer 1020, but is not limited thereto and may be formed as the structure as illustrated in (c) or (d) of FIG. 7B. The rear surface of the adhesive layer 1041 formed on the rear surface of the conductive pattern layer 1020 may be attached to the vehicle glass 310. Accordingly, a separate dielectric layer may not be formed between the conductive pattern layer 1020 and the adhesive layer 1041 in the second antenna structure 1100-2, thereby reducing the overall antenna height and enhancing the transmission characteristics. In some embodiments, the adhesive layer 1041 may be formed as a detachable adhesive to be attached to and detached from the vehicle glass 310. The second antenna structure 1100-2 may be attached to the inner region of the vehicle glass 310 to transmit a wireless signal into the interior of the vehicle.

Referring to FIGS. 12A and 12B, (i) the signal loss characteristics of the first antenna structure 1100-1 and (ii) the signal loss characteristics of the second antenna structure 1100-2 are illustrated. It may be confirmed that the performance is almost similar to that of the first antenna structure 1100-1 even though the laminated structure including the antenna pattern and the feeding pattern is simplified in the second antenna structure 1100-2 in which a separate dielectric substrate is not arranged.

In some embodiments, the signal loss characteristics of the first and second antenna structures 1100-1 and 1100-2 may be almost similar in a frequency band of about 0.6 GHz to 2.7 GHz. For example, the signal loss characteristics of the second antenna structure 1100-2 may be superior to those of the first antenna structure 1100-1 in a frequency band of about 2.7 GHz to 4.5 GHz. In another example, in a frequency band of about 4.5 GHz to 6 GHz, the performance of the first antenna structure 1100-1 may be somewhat higher than that of the second antenna structure 1100-2 but a difference therebetween may not be great and may be maintained in a certain range. Therefore, the second antenna structure 1100-2 may exhibit similar signal loss characteristics to the first antenna structure 1100-1 without a separate dielectric layer in the frequency band of about 0.6 GHz to 6 GHz. Accordingly, the second antenna structure 1100-2 may maintain the antenna performance and also may improve transmission performance while reducing the overall antenna height compared to the first antenna structure 1100-1.

In some embodiments, it may be confirmed that the first antenna structure 1100-1 maintains the signal loss characteristics below -3 dB, by which the first antenna structure 1100-1 is applicable as a vehicle antenna, in the frequency band of about 0.6 GHz to 6 GHz. This may mean that a seamless transparent antenna module structure according to this specification operates effectively even in an actual vehicle environment where the vehicle glass is formed.

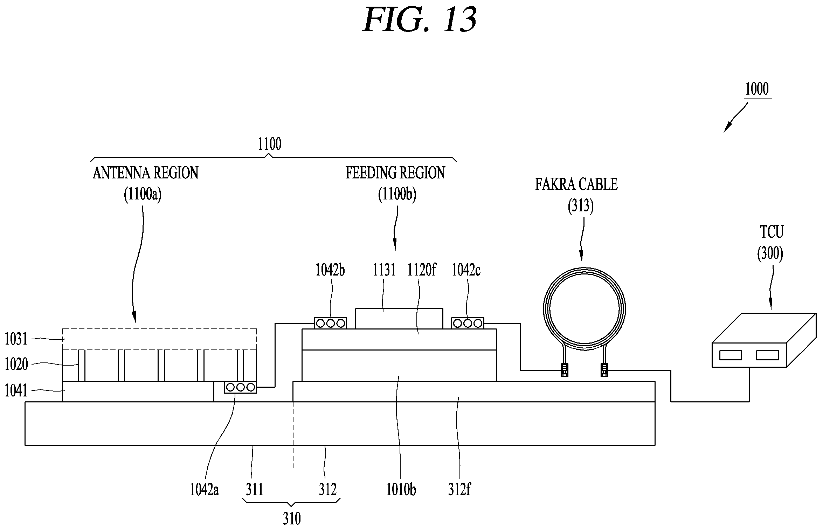

In some embodiments, a radiator of a transparent antenna module according to the disclosure may be configured to be electrically connected with a feeding pattern. In this regard, FIG. 13 is a view of a configuration in which a radiator and a feeding pattern of a transparent antenna module according to the specification and a telematics control unit are connected.

The structure of the seamless transparent antenna module proposed in this specification is as illustrated in FIG. 13. In this regard, the transparent antenna module 1100 may have a cross-sectional structure configured as one of (a), (b), (c), and (d) of FIG. 7B. In the transparent antenna module 1100, an ACF bonding location may be arranged in the lower region of the transparent cover layer 1031 and the transparent electrode of the conductive pattern layer 1020. The cross-sectional structure of a feeding region 1100b in which the feeding pattern 1120f is formed may include a heat-resistant cover layer 1031, a copper foil-type feeding pattern 1120f, and a heat-resistant substrate 1010b. The copper foil-type feeding pattern 1120f may have a structure in which a metal pattern is filled, rather than a metal mesh grid structure. The heat-resistant substrate 1010b may be formed as an opaque substrate with a heat-resistant structure that may be connected by soldering. In this specification, the structure may be simplified by aligning the ACF bonding position and a soldering position in one direction. This may allow the feeding pattern 1100b to be implemented using a single-side flexible copper clad layer (FCCL) material. This may allow exclusion of a via hole process between the feeding pattern 1120f of the feeding region 1100b and the lower conductive pattern, resulting in significant reduction of manufacturing complexity and costs. The transparent cover layer 1131 may be formed in the upper region of the feeding pattern 1120f.

In the feeding region 1100b of the single-side FCCL structure, the feeding pattern 1120f may be implemented using a copper (Cu) material. In the feeding region 1100b of the single-side FCCL structure, the heat-resistant substrate 1010b may be implemented using a polyimide (PI) material. An end portion of the feeding pattern 1120f formed on the upper portion of the heat-resistant substrate 1010b may be connected to a lower end portion of the conductive pattern layer 1020 of the antenna region 1100a. To minimize a height difference between steps in a connection structure including such a step structure, it may be advantageous for the PI material of the heat-resistant substrate 1010b to be formed thin. According to an embodiment, the thickness of the PI material of the heat-resistant substrate 1010b according to the specification may be formed to be 60 mm or less.

The ACF bonding location and soldering location may be formed in the upper region of the heat-resistant substrate 1010b and the feeding pattern 1120f. The feeding pattern 1120f according to this specification and the Fakra cable 312 that may be used in the vehicle may be connected through soldering. The Fakra cable 313 may be connected to a telematics control unit (TCU) arranged inside the vehicle to enable transmission and reception of signals.

Referring to FIGS. 7A, 7B, and 13, the conductive pattern layer 1020 constituting the radiator may be configured to be connected to the feeding pattern 1120f formed on the opaque substrate 1010b. The conductive pattern layer 1020 may be arranged in the transparent region 311 of the vehicle glass 310. The conductive pattern layer 1020 may be implemented as the conductive pattern layer 1020-2 of the second structure or the conductive pattern layer 1020-3 of the third structure as illustrated in (c) or (d) of FIG. 7B, in addition to the conductive pattern layer of the first structure as illustrated in (a) and (b) of FIG. 7B. The feeding pattern 1120f formed by the feeding pattern 1120f may be arranged in the opaque region 312 of the vehicle glass 310. The opaque region 312 of the vehicle glass 310 may be referred to as a black mask region. A frit region 312f may be formed in an upper region of the opaque region 312. The feeding region 1100b may be formed in the upper region of the frit region 312f. A partial region of the frit region 312f may be removed, and the feeding region 1100b may be formed in the region from which the frit region 312f has been removed.

Hereinafter, a detailed description will be given of the configuration in which the radiator region 1100a and the feeding region 1100b of the transparent antenna module 1100 are coupled. One end portion of the conductive pattern layer 1020 constituting the radiator region 1100a may more extend to an outer region than one end portion of the adhesive layer 1041. Accordingly, a first electrode 1042a formed on the rear surface of the conductive pattern layer 1020 on which the adhesive layer 1041 is not formed may be connected to a second electrode 1042b of the feeding pattern 1120f. The first electrode 1042a on the rear surface of the conductive pattern layer 1020 may be connected to the second electrode 1042b of the feeding pattern 1120f through ACF bonding. ACF bonding may be performed such that the first electrode 1042a and the second electrode 1042b are bonded using a tape with metal balls added therein in a certain temperature range and a certain pressure range. The first electrode 1042a and the second electrode 1042b may be bonded to be in contact with each other through the metal balls.

The second electrode 1042b formed on the one end portion of the feeding pattern 1120f may be connected to a radiator implemented as a transparent antenna. A third electrode 1042c which is formed on another end portion of the feeding pattern 1120f may be connected to one end portion of the cable 313 through soldering. Another end portion of the cable 313 may be electrically connected to the TCU 300. The TCU 300 may be configured to transmit a wireless signal to the radiator of the transparent antenna module 1100 and control the signal transmitted to the transparent antenna module 1100. The transparent antenna module 1100 may be configured to include an antenna region 1100a and a feeding region 1100b. The antenna assembly 1000 may include the transparent antenna module 1100, the cable 313, and the TCU 300.

In some embodiments, the structure of the transparent antenna module according to the specification may be formed as the structures illustrated in (a) to (d) of FIG. 7B, and the structures of the transparent antenna module of (a) to (d) of FIG. 7B may be formed by a manufacturing method (process) of FIGS. 9A to 10B. Hereinafter, a method for manufacturing a transparent antenna module according to the specification will be described with reference to the transparent antenna structure and manufacturing method (process) of FIGS. 7A to 10B.

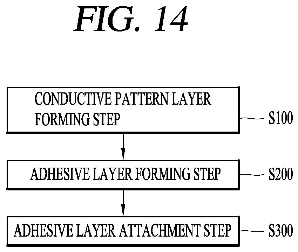

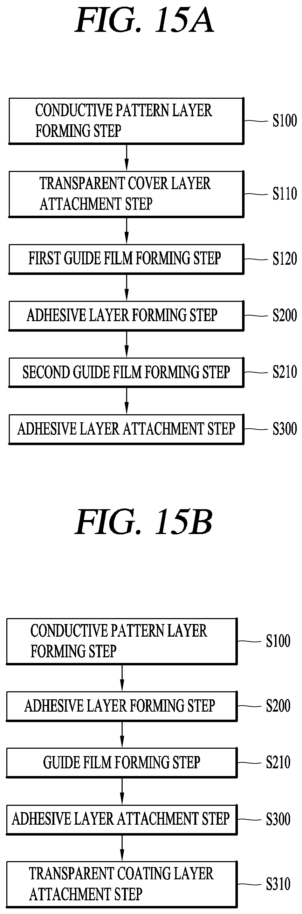

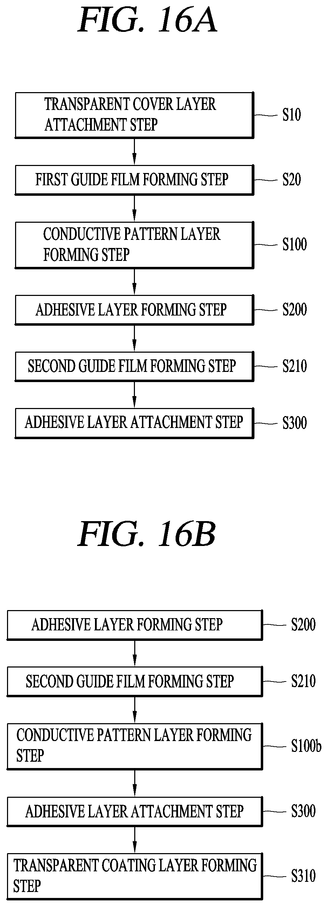

In this regard, FIG. 14 is a flowchart of a method for manufacturing a transparent antenna module according to the specification. FIGS. 15A to 16B are flowcharts of a method for manufacturing a transparent antenna module according to the embodiments of FIGS. 9A to 10B.

Referring to FIGS. 7A to 10B and FIG. 14, a method for manufacturing a transparent antenna module may include a conductive pattern layer forming step (S100), an adhesive layer forming step (S200), and an adhesive layer attachment step (S300).

In the conductive pattern layer forming step (S100), the conductive pattern layer 1020 may be formed so that metal mesh grids formed at a first interval in one axial direction are formed to have a first thickness in a height direction. In the adhesive layer forming step (S200), an adhesive layer may be formed so that a front surface thereof is coupled to a lower end portion of the conductive pattern layer 1020. In the adhesive layer attachment step (S300), a rear surface of the adhesive layer may be attached to a vehicle glass.

Referring to FIGS. 9A, 9B, 14, and 15A, in the conductive pattern layer forming step (S100), the conductive pattern layer 1020 may be formed as a conductive pattern layer of a first structure in which a dielectric material is filled between the metal mesh grids. A thickness of the dielectric material may be the same as the first thickness of the conductive pattern layer 1020.

Referring to FIGS. 9A, 9B, 14, and 15A, the manufacturing method may further include a transparent cover layer attachment step (S110) and a first guide film forming step (S120), after the conductive pattern layer forming step (S100). In some embodiments, the manufacturing method may further include a second guide film forming step (S210) after the adhesive layer forming step (S200). In this regard, the second guide film forming step (S210) may be performed after the first guide film forming step (S120) and may also be performed before the adhesive layer forming step (S200).

In the transparent cover layer attachment step (S110), a transparent cover layer 1031 may be attached to an upper end portion of a conductive pattern layer 1020 of a first structure filled with a dielectric material. In the first guide film forming step (S120), a first guide film 1032a whose rear surface is coupled to a front surface of the transparent cover layer 1031 may be formed. In the second guide film forming step (S210), a second guide film 1032b that is coupled to a rear surface of an adhesive layer 1041 may be formed. In the adhesive layer attachment step (S300), the first guide film 1032a and the second guide film 1032b may be removed when a transparent antenna module is attached to a vehicle glass 310.

Referring to FIGS. 9A, 9B, 14, and 15B, in the conductive pattern layer forming step (S100), the conductive pattern layer 1020 may be formed as the conductive pattern layer of the first structure in which the dielectric material is filled between the metal mesh grids. A thickness of the dielectric material may be the same as the first thickness of the conductive pattern layer 1020.

Referring to FIGS. 9A, 9B, 14, and 15B, the guide film forming step (S210) may be performed after the conductive pattern layer forming step (S100). In this regard, the guide film forming step (S210) may be performed before or after the conductive layer forming step (S100). In the guide film forming step (S210), a guide film 1032 may be formed on the rear surface of the adhesive layer 1041. The manufacturing method may further include a transparent coating layer forming step (S310) after the adhesive layer attachment step (S300). In the transparent coating layer forming step (S310), a transparent coating layer 1031b may be formed in an upper region of the conductive pattern layer 1020 of the first structure filled with the dielectric material. The transparent coating layer 1031b may be formed to extend from the upper region to side regions of the conductive pattern layer 1020. In the adhesive layer attachment step (S300), the guide film 1032 may be removed when the transparent antenna module is adhered to the vehicle glass 310.

Referring to FIGS. 10A, 14, and 16A, in the conductive pattern layer forming step (S100), the conductive pattern layer may be formed as a conductive pattern layer 1020-2 of a second structure in which the dielectric material is not filled between the metal mesh lattices. A second thickness t2 of the conductive pattern layer 1020-2 of the second structure may be thinner than the first thickness t1 of the conductive pattern layer 1020 of the first structure filled with the dielectric material. A lower end portion of the conductive pattern layer 1020-2 of the second structure may be inserted into an inner region of the adhesive layer 1041.

The manufacturing method may further include a transparent cover layer attachment step (S10) and a first guide film forming step (S20) before the conductive pattern layer forming step (S100). In this regard, the transparent cover layer attachment step (S10) and the first guide film forming step (S20) may be performed after the conductive pattern layer forming step (S100). In some embodiments, the manufacturing method may further include a second guide film forming step (S210) after the adhesive layer forming step (S200). In this regard, the second guide film forming step (S210) may be performed after the first guide film forming step (S20) and may also be performed before the adhesive layer forming step (S200).

In the transparent cover layer attachment step (S10), a transparent cover layer 1031 may be attached to an upper end portion of the conductive pattern layer 1020-2 of the second structure that is not filled with the dielectric material. In the first guide film forming step (S20), a first guide film 1032a whose rear surface is coupled to the front surface of the transparent cover layer 1031 may be formed. In the second guide film forming step (S210), a second guide film 1032b that is coupled to the rear surface of the adhesive layer 1041 may be formed. In the adhesive layer attachment step (S300), the first guide film 1032a and the second guide film 1032b may be removed when the transparent antenna module is attached to the vehicle glass 310. As the conductive pattern layer 1020-2 of the second structure is inserted into the inner region of the adhesive layer 1041, a second height h2 of the conductive pattern layer 1020-2 of the second structure may be smaller than the second thickness t2 of the conductive pattern layer 1020-2 of the second structure before being inserted into the inner region of the adhesive layer 1041.

Referring to FIGS. 10B, 14, and 16B, in the conductive pattern layer forming step (S100), the conductive pattern layer may be formed as a conductive pattern layer 1020-3 of a third structure in which a dielectric material is filled between the metal mesh grids. A third thickness t3 of the conductive pattern layer 1020-3 of the third structure may be thinner than the first thickness t1 of the conductive pattern layer 1020 of the first structure filled with the dielectric material. A lower end portion of the conductive pattern layer 1020-3 of the third structure may be formed to be in contact with the front surface of the adhesive layer 1041.

Referring to FIGS. 10B, 14, and 16B, the conductive pattern layer forming step (S100b) may be performed after the guide film forming step (S210). In this regard, the adhesive layer forming step (S200) and the guide film forming step (S210) may be performed before or after the conductive layer forming step (S100b). In the guide film forming step (S210), a guide film 1032 may be formed on the rear surface of the adhesive layer 1041. The manufacturing method may further include a transparent coating layer forming step (S310) after the adhesive layer attachment step (S300). In the transparent coating layer forming step (S310), a transparent coating layer 1031c may be formed in an upper region of the conductive pattern layer 1020-3 of the third structure which is not filled with the dielectric material. The transparent coating layer 1031c may be formed to extend from the upper region to side regions of the conductive pattern layer 1020. In the adhesive layer attachment step (S300), the guide film 1032 may be removed when the transparent antenna module is adhered to the vehicle glass 310. As the conductive pattern layer 1020-3 of the third structure is in contact with the front surface of the adhesive layer 1041, a third height h3 of the conductive pattern layer 1020-3 of the third structure may be the same as a third thickness t3 of the conductive pattern layer 1020-3 of the third structure before being in contact with the front surface of the adhesive layer 1041.

The foregoing description has been given of the transparent antenna module that may be arranged on the vehicle glass and the transparent antenna manufacturing method for manufacturing the same. In this regard, the technical effects of a transparent antenna module that may be arranged on a vehicle glass and a transparent antenna manufacturing method for manufacturing the same will be described as follows.

According to the specification, a transparent antenna module in which a conductive pattern layer is coupled to an adhesive layer may be attached to a vehicle glass to be utilized as a vehicle antenna that may enable 5G and V2X communications.

According to the specification, a transparent antenna module may have an advantage of not being restricted by vehicle design because the transparent antenna module is installable on side glass, windshield, sunroof, rear glass, side mirrors, headlamps, and the like of a vehicle.

According to the specification, a transparent antenna module that is capable of maintaining stable antenna performance even under changes in internal/external vehicle environments may be provided.

According to the specification, an occurrence of signal loss in a communication frequency band when receiving a communication signal through glass inside a vehicle may be minimized by implementing each material in an antenna stack structure as a low-loss material and structure.

According to the specification, a transparent antenna module which has a heat-resistant material and an anti-yellowing function may be implemented even in an antenna because the antenna is easily exposed to high temperature and UV rays due to sunlight.

According to the specification, a transparent antenna module that is capable of improving the transmittance of an antenna element without obstructing the view of a driver and passengers may be implemented.

According to the specification, a transparent antenna module that is capable minimizing an edge region where an opaque region of vehicle glass is formed may be implemented.

According to the specification, a transparent antenna module may be implemented in which a conductive pattern layer is coupled to an adhesive layer without using a separate antenna substrate to solve a problem that transmittance is reduced and an edge of a substrate is visible by the naked eyes due to the formation of a transparent electrode layer on a transparent substrate.

According to the specification, antenna element transmittance may be improved and an edge region of an antenna substrate may be made as invisible as possible.

According to the specification, a manufacturing process may be simplified and manufacturing costs may be reduced by avoiding the use of a separate antenna substrate layer on which an antenna pattern is formed.

Further scope of applicability of the disclosure will become apparent from the following detailed description. It should be understood, however, that the detailed description and specific examples, such as the preferred embodiments, are given by way of illustration only, because various changes and modifications within the technical idea and scope of the disclosure will be apparent to those skilled in the art.

In relation to the disclosure, the design of the transparent antenna module and the manufacturing and controlling method of the transparent antenna module may be implemented as computer-readable codes in a program-recorded medium. The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. Also, the computer-readable medium may also be implemented as a format of carrier wave (e.g., transmission via an Internet). The computer may include the controller of the terminal. Therefore, it should also be understood that the above-described embodiments are not limited by any of the details of the foregoing description, unless otherwise specified, but rather should be construed broadly within its scope as defined in the appended claims.

## Claims

1. A transparent antenna module (1100, 1100a, 1100b, 1100c, 1100d) comprising:
a conductive pattern layer (1020, 1020-2, 1020-3) formed such that metal mesh grids formed at a first interval in one axial direction have a first thickness (t1) or a thickness thinner than the first thickness (t1) in a height direction, wherein a radiator formed by the metal mesh grids is configured to radiate a wireless signal of a specific frequency band;
wherein the conductive pattern layer (1020, 1020-2, 1020-3) is formed as a first structure in which a dielectric material is filled between the metal mesh grids; and
an adhesive layer (1041) having a front surface coupled to a lower end portion of the conductive pattern layer (1020, 1020-2, 1020-3) and a rear surface attached to glass (310) of a vehicle,
wherein the lower end portion of the conductive pattern layer (1020, 1020-2, 1020-3) is in contact with the front surface of the adhesive layer (1041) or extends to an inner region of the front surface of the adhesive layer (1041).

2. The transparent antenna module (1100, 1100a, 1100b, 1100c, 1100d) of claim 1, wherein the adhesive layer (1041) is formed by adding an inorganic material, containing a benzotriazole-based polymer, a triazole-based polymer, or SiO₂ or TiO₂, to an acrylic adhesive so that ultraviolet, UV, rays having a wavelength band between 330 nm and 380 nm are cut by at least a certain percentage.

3. The transparent antenna module (1100, 1100a, 1100b, 1100c, 1100d) of claim 2, wherein the inorganic material in the adhesive layer (1041) is mixed in an amount of at least 1 wt% for UV cutting and in an amount of 30 wt% or less to be bonded to the glass (310).

4. The transparent antenna module (1100, 1100a, 1100b, 1100c, 1100d) of claim 2, wherein a height of the adhesive layer (1041) is formed to be at least 10 um so that the adhesive layer (1041) is adhered to the glass (310) and is formed to be 100 um or less so that transmittance of the transparent antenna module (1100, 1100a, 1100b, 1100c, 1100d) is at least a threshold value.

5. The transparent antenna module (1100, 1100a, 1100b, 1100c, 1100d) of claim 4, wherein the height of the adhesive layer (1041) is formed to be at least 50 um so that signal loss characteristics are below a threshold value in a frequency band of 0.6 GHz to 6 GHz, and is formed to be 100 um or less so that the transmittance of the transparent antenna module (1100, 1100a, 1100b, 1100c, 1100d) is at least the threshold value.

6. The transparent antenna module (1100, 1100a, 1100b, 1100c, 1100d) of any one of claims 1 to 5, wherein a thickness of the dielectric material is formed to be equal to the first thickness (t1) of the conductive pattern layer (1020, 1020-2, 1020-3).

7. The transparent antenna module (1100, 1100a) of claim 6, further comprising:
a transparent cover layer (1031) coupled to an upper end portion of the conductive pattern layer (1020) of the first structure filled with the dielectric material;
a first guide film (1032a) having a rear surface coupled to a front surface of the transparent cover layer (1031); and
a second guide film (1032b) coupled to the rear surface of the adhesive layer (1041),
wherein the first guide film (1032a) and the second guide film (1032b) are removed when the transparent antenna module (1100a) is adhered to the glass (310) of the vehicle.

8. The transparent antenna module (1100, 1100b) of claim 6, further comprising:
a guide film (1032) coupled to a rear surface of the adhesive layer (1041); and
a transparent coating layer (1031b) formed in an upper region of the conductive pattern layer (1020) of the first structure filled with the dielectric material,
wherein the guide film (1032) is removed when the transparent antenna module (1100b) is adhered to the glass (310) of the vehicle.

9. The transparent antenna module (1100, 1100a, 1100b, 1100c, 1100d) of any one of claims 1 to 8, wherein the conductive pattern layer (1020, 1020-2, 1020-3) constituting the radiator is configured to be connected to a feeding pattern (1120f) formed on an opaque substrate (1010b),
one end portion of the conductive pattern layer (1020, 1020-2, 1020-3) extends to an outer region compared to one end portion of the adhesive layer (1041), and
a first electrode (1042a) is arranged on a rear surface of the conductive pattern layer, on which the adhesive layer (1041) is not formed, to be connected to a second electrode (1042b) of the feeding pattern (1120f).

10. The transparent antenna module (1100, 1100a, 1100b, 1100c, 1100d)of claim 9, wherein the first electrode (1042a) is connected to the second electrode (1042b) of the feeding pattern (1120f) through ACF bonding on the rear surface of the conductive pattern layer (1020, 1020-2, 1020-3), and
the ACF bonding is to bond the first electrode (1042a) and the second electrode (1042b) using a tape, to which metal balls are added, in a certain temperature range and a certain pressure range, such that the first electrode (1042a) and the second electrode (1042b) are in contact with each other through the metal balls.

11. The transparent antenna module (1100, 1100a, 1100b, 1100c, 1100d) of claim 10, wherein the second electrode (1042b) formed on one end portion of the feeding pattern (1120f) is connected to the radiator implemented as a transparent antenna,
the second electrode (1042b) formed on another end portion of the feeding pattern (1120f) is soldered to one end portion of a cable, and
another end portion of the cable is electrically connected to a telematics control unit, TCU, (300) configured to transmit a wireless signal to the radiator of the transparent antenna module (1100) and control the transparent antenna module (1100, 1100a, 1100b, 1100c, 1100d).

## Patentansprüche

1. Transparentes Antennenmodul (1100, 1100a, 1100b, 1100c, 1100d), umfassend:
eine leitfähige Musterschicht (1020, 1020-2, 1020-3), die derart ausgebildet ist, dass Metallmaschengitter, die in einer Achsrichtung in einem ersten Abstand ausgebildet sind, in einer Höhenrichtung eine erste Dicke (t1) oder eine Dicke aufweisen, die dünner als die erste Dicke (t1) ist, wobei ein durch die Metallmaschengitter gebildeter Strahler dazu eingerichtet ist, ein drahtloses Signal eines bestimmten Frequenzbands abzustrahlen;
wobei die leitfähige Musterschicht (1020, 1020-2, 1020-3) als eine erste Struktur ausgebildet ist, bei der ein dielektrisches Material zwischen die Metallmaschengitter gefüllt ist; und
eine Klebeschicht (1041), deren Vorderfläche mit einem unteren Endabschnitt der leitfähigen Musterschicht (1020, 1020-2, 1020-3) gekoppelt ist und deren Rückfläche an einem Glas (310) eines Fahrzeugs angebracht ist,
wobei der untere Endabschnitt der leitfähigen Musterschicht (1020, 1020-2, 1020-3) mit der Vorderfläche der Klebeschicht (1041) in Kontakt steht oder sich bis zu einem inneren Bereich der Vorderfläche der Klebeschicht (1041) erstreckt.

2. Transparentes Antennenmodul (1100, 1100a, 1100b, 1100c, 1100d) nach Anspruch 1, wobei die Klebeschicht (1041) dadurch ausgebildet ist, dass einem Acrylklebstoff ein anorganisches Material, das ein Benzotriazol-basiertes Polymer, ein Triazol-basiertes Polymer oder SiO₂ oder TiO₂ enthält, zugesetzt wird, sodass ultraviolette, UV-, Strahlen mit einem Wellenlängenband zwischen 330 nm und 380 nm um mindestens einen bestimmten Prozentsatz abgeschnitten werden.

3. Transparentes Antennenmodul (1100, 1100a, 1100b, 1100c, 1100d) nach Anspruch 2, wobei das anorganische Material in der Klebeschicht (1041) in einer Menge von mindestens 1 Gew.-% zum Abschneiden von UV und in einer Menge von 30 Gew.-% oder weniger gemischt ist, um mit dem Glas (310) verbunden zu werden.

4. Transparentes Antennenmodul (1100, 1100a, 1100b, 1100c, 1100d) nach Anspruch 2, wobei eine Höhe der Klebeschicht (1041) so ausgebildet ist, dass sie mindestens 10 µm beträgt, sodass die Klebeschicht (1041) an dem Glas (310) haftet, und so ausgebildet ist, dass sie 100 µm oder weniger beträgt, sodass eine Transmission des transparenten Antennenmoduls (1100, 1100a, 1100b, 1100c, 1100d) mindestens einen Schwellenwert aufweist.

5. Transparentes Antennenmodul (1100, 1100a, 1100b, 1100c, 1100d) nach Anspruch 4, wobei die Höhe der Klebeschicht (1041) so ausgebildet ist, dass sie mindestens 50 µm beträgt, sodass Signalverlustkennwerte in einem Frequenzband von 0,6 GHz bis 6 GHz unter einem Schwellenwert liegen, und so ausgebildet ist, dass sie 100 µm oder weniger beträgt, sodass die Transmission des transparenten Antennenmoduls (1100, 1100a, 1100b, 1100c, 1100d) mindestens den Schwellenwert aufweist.

6. Transparentes Antennenmodul (1100, 1100a, 1100b, 1100c, 1100d) nach einem der Ansprüche 1 bis 5, wobei eine Dicke des dielektrischen Materials so ausgebildet ist, dass sie gleich der ersten Dicke (t1) der leitfähigen Musterschicht (1020, 1020-2, 1020-3) ist.

7. Transparentes Antennenmodul (1100, 1100a) nach Anspruch 6, ferner umfassend:
eine transparente Deckschicht (1031), die mit einem oberen Endabschnitt der leitfähigen Musterschicht (1020) der ersten Struktur, die mit dem dielektrischen Material gefüllt ist, gekoppelt ist;
eine erste Führungsfolie (1032a), deren Rückfläche mit einer Vorderfläche der transparenten Deckschicht (1031) gekoppelt ist; und
eine zweite Führungsfolie (1032b), die mit der Rückfläche der Klebeschicht (1041) gekoppelt ist,
wobei die erste Führungsfolie (1032a) und die zweite Führungsfolie (1032b) entfernt werden, wenn das transparente Antennenmodul (1100a) an dem Glas (310) des Fahrzeugs angehaftet wird.

8. Transparentes Antennenmodul (1100, 1100b) nach Anspruch 6, ferner umfassend:
eine Führungsfolie (1032), die mit einer Rückfläche der Klebeschicht (1041) gekoppelt ist; und
eine transparente Beschichtungsschicht (1031b), die in einem oberen Bereich der leitfähigen Musterschicht (1020) der ersten Struktur, die mit dem dielektrischen Material gefüllt ist, ausgebildet ist,
wobei die Führungsfolie (1032) entfernt wird, wenn das transparente Antennenmodul (1100b) an dem Glas (310) des Fahrzeugs angehaftet wird.

9. Transparentes Antennenmodul (1100, 1100a, 1100b, 1100c, 1100d) nach einem der Ansprüche 1 bis 8, wobei die den Strahler bildende leitfähige Musterschicht (1020, 1020-2, 1020-3) dazu eingerichtet ist, mit einem Speisemuster (1120f) verbunden zu werden, das auf einem opaken Substrat (1010b) ausgebildet ist,
sich ein Endabschnitt der leitfähigen Musterschicht (1020, 1020-2, 1020-3) verglichen mit einem Endabschnitt der Klebeschicht (1041) zu einem äußeren Bereich erstreckt, und
eine erste Elektrode (1042a) auf einer Rückfläche der leitfähigen Musterschicht, auf der die Klebeschicht (1041) nicht ausgebildet ist, angeordnet ist, um mit einer zweiten Elektrode (1042b) des Speisemusters (1120f) verbunden zu werden.

10. Transparentes Antennenmodul (1100, 1100a, 1100b, 1100c, 1100d) nach Anspruch 9, wobei die erste Elektrode (1042a) durch ACF-Bonding auf der Rückfläche der leitfähigen Musterschicht (1020, 1020-2, 1020-3) mit der zweiten Elektrode (1042b) des Speisemusters (1120f) verbunden ist, und
das ACF-Bonding dazu dient, die erste Elektrode (1042a) und die zweite Elektrode (1042b) unter Verwendung eines Bands, dem Metallkugeln zugesetzt sind, in einem bestimmten Temperaturbereich und einem bestimmten Druckbereich zu verbinden, sodass die erste Elektrode (1042a) und die zweite Elektrode (1042b) durch die Metallkugeln miteinander in Kontakt stehen.

11. Transparentes Antennenmodul (1100, 1100a, 1100b, 1100c, 1100d) nach Anspruch 10, wobei die zweite Elektrode (1042b), die an einem Endabschnitt des Speisemusters (1120f) ausgebildet ist, mit dem als transparente Antenne implementierten Strahler verbunden ist,
die zweite Elektrode (1042b), die an einem anderen Endabschnitt des Speisemusters (1120f) ausgebildet ist, mit einem Endabschnitt eines Kabels verlötet ist, und
ein anderer Endabschnitt des Kabels elektrisch mit einer Telematik-Steuereinheit, TCU, (300) verbunden ist, die dazu eingerichtet ist, ein drahtloses Signal an den Strahler des transparenten Antennenmoduls (1100) zu übertragen und das transparente Antennenmodul (1100, 1100a, 1100b, 1100c, 1100d) zu steuern.

## Revendications

1. Module d'antenne transparent (1100, 1100a, 1100b, 1100c, 1100d), comprenant :
une couche de motif conducteur (1020, 1020-2, 1020-3) formée de telle sorte que des grilles à mailles métalliques formées à un premier intervalle dans une direction axiale présentent une première épaisseur (t1) ou une épaisseur inférieure à la première épaisseur (t1) dans une direction de hauteur, dans lequel un élément rayonnant formé par les grilles à mailles métalliques est configuré pour rayonner un signal sans fil d'une bande de fréquences spécifique ;
dans lequel la couche de motif conducteur (1020, 1020-2, 1020-3) est formée comme une première structure dans laquelle un matériau diélectrique est rempli entre les grilles à mailles métalliques ; et
une couche adhésive (1041) ayant une surface avant couplée à une partie d'extrémité inférieure de la couche de motif conducteur (1020, 1020-2, 1020-3) et une surface arrière fixée à un verre (310) d'un véhicule,
dans lequel la partie d'extrémité inférieure de la couche de motif conducteur (1020, 1020-2, 1020-3) est en contact avec la surface avant de la couche adhésive (1041) ou s'étend jusqu'à une région intérieure de la surface avant de la couche adhésive (1041).

2. Module d'antenne transparent (1100, 1100a, 1100b, 1100c, 1100d) selon la revendication 1, dans lequel la couche adhésive (1041) est formée en ajoutant à un adhésif acrylique un matériau inorganique contenant un polymère à base de benzotriazole, un polymère à base de triazole, ou SiO₂ ou TiO₂, de sorte que des rayons ultraviolets, UV, ayant une bande de longueurs d'onde comprise entre 330 nm et 380 nm soient coupés d'au moins un certain pourcentage.

3. Module d'antenne transparent (1100, 1100a, 1100b, 1100c, 1100d) selon la revendication 2, dans lequel le matériau inorganique dans la couche adhésive (1041) est mélangé en une quantité d'au moins 1 % en poids pour la coupure des UV et en une quantité de 30 % en poids ou moins afin d'être lié au verre (310).

4. Module d'antenne transparent (1100, 1100a, 1100b, 1100c, 1100d) selon la revendication 2, dans lequel une hauteur de la couche adhésive (1041) est formée de manière à être d'au moins 10 µm afin que la couche adhésive (1041) adhère au verre (310), et est formée de manière à être de 100 µm ou moins afin que la transmittance du module d'antenne transparent (1100, 1100a, 1100b, 1100c, 1100d) soit au moins une valeur seuil.

5. Module d'antenne transparent (1100, 1100a, 1100b, 1100c, 1100d) selon la revendication 4, dans lequel la hauteur de la couche adhésive (1041) est formée de manière à être d'au moins 50 µm afin que des caractéristiques de perte de signal soient inférieures à une valeur seuil dans une bande de fréquences de 0,6 GHz à 6 GHz, et est formée de manière à être de 100 µm ou moins afin que la transmittance du module d'antenne transparent (1100, 1100a, 1100b, 1100c, 1100d) soit au moins la valeur seuil.

6. Module d'antenne transparent (1100, 1100a, 1100b, 1100c, 1100d) selon l'une quelconque des revendications 1 à 5, dans lequel une épaisseur du matériau diélectrique est formée de manière à être égale à la première épaisseur (t1) de la couche de motif conducteur (1020, 1020-2, 1020-3).

7. Module d'antenne transparent (1100, 1100a) selon la revendication 6, comprenant en outre :
une couche de couverture transparente (1031) couplée à une partie d'extrémité supérieure de la couche de motif conducteur (1020) de la première structure remplie du matériau diélectrique ;
un premier film de guidage (1032a) ayant une surface arrière couplée à une surface avant de la couche de couverture transparente (1031) ; et
un second film de guidage (1032b) couplé à la surface arrière de la couche adhésive (1041),
dans lequel le premier film de guidage (1032a) et le second film de guidage (1032b) sont retirés lorsque le module d'antenne transparent (1100a) est collé au verre (310) du véhicule.

8. Module d'antenne transparent (1100, 1100b) selon la revendication 6, comprenant en outre :
un film de guidage (1032) couplé à une surface arrière de la couche adhésive (1041) ; et
une couche de revêtement transparente (1031b) formée dans une région supérieure de la couche de motif conducteur (1020) de la première structure remplie du matériau diélectrique,
dans lequel le film de guidage (1032) est retiré lorsque le module d'antenne transparent (1100b) est collé au verre (310) du véhicule.

9. Module d'antenne transparent (1100, 1100a, 1100b, 1100c, 1100d) selon l'une quelconque des revendications 1 à 8, dans lequel la couche de motif conducteur (1020, 1020-2, 1020-3) constituant l'élément rayonnant est configurée pour être connectée à un motif d'alimentation (1120f) formé sur un substrat opaque (1010b),
une partie d'extrémité de la couche de motif conducteur (1020, 1020-2, 1020-3) s'étend vers une région extérieure par rapport à une partie d'extrémité de la couche adhésive (1041), et
une première électrode (1042a) est disposée sur une surface arrière de la couche de motif conducteur, sur laquelle la couche adhésive (1041) n'est pas formée, afin d'être connectée à une seconde électrode (1042b) du motif d'alimentation (1120f).

10. Module d'antenne transparent (1100, 1100a, 1100b, 1100c, 1100d) selon la revendication 9, dans lequel la première électrode (1042a) est connectée à la seconde électrode (1042b) du motif d'alimentation (1120f) par collage ACF sur la surface arrière de la couche de motif conducteur (1020, 1020-2, 1020-3), et
le collage ACF sert à lier la première électrode (1042a) et la seconde électrode (1042b) au moyen d'un ruban auquel des billes métalliques sont ajoutées, dans une certaine plage de température et une certaine plage de pression, de sorte que la première électrode (1042a) et la seconde électrode (1042b) soient en contact l'une avec l'autre par l'intermédiaire des billes métalliques.

11. Module d'antenne transparent (1100, 1100a, 1100b, 1100c, 1100d) selon la revendication 10, dans lequel la seconde électrode (1042b) formée sur une partie d'extrémité du motif d'alimentation (1120f) est connectée à l'élément rayonnant mis en œuvre comme une antenne transparente,
la seconde électrode (1042b) formée sur une autre partie d'extrémité du motif d'alimentation (1120f) est soudée à une partie d'extrémité d'un câble, et
une autre partie d'extrémité du câble est connectée électriquement à une unité de commande télématique, TCU, (300) configurée pour transmettre un signal sans fil à l'élément rayonnant du module d'antenne transparent (1100) et commander le module d'antenne transparent (1100, 1100a, 1100b, 1100c, 1100d).
